# EUROPÄISCHE PATENTSCHRIFT

(11) **EP 3 286 033 B1**
(45) Veröffentlichungstag und Bekanntmachung des Hinweises auf die Patenterteilung: **01.09.2021**
(21) Anmeldenummer: 16715498.8
(22) Anmeldetag: 06.04.2016
(51) Int. Cl.: B60L 55/00, B60L 53/24

(54) **LEISTUNGSSCHALTUNG ZUR STROMVERSORGUNG IN EINEM ELEKTRISCH ANGETRIEBENEN FAHRZEUG UND STATIONÄRES ENERGIEVERSORGUNGSSYSTEM**
POWER CIRCUIT FOR POWER SUPPLY IN AN ELECTRICALLY DRIVEN VEHICLE AND STATIONARY ENERGY SUPPLY SYSTEM
CIRCUIT DE PUISSANCE POUR L'ALIMENTATION ÉLECTRIQUE DANS UN VÉHICULE À PROPULSION ÉLECTRIQUE ET SYSTÈME D'ALIMENTATION EN ÉNERGIE FIXE

(30) Priorität: 23.04.2015 DE 102015207413
(43) Veröffentlichungstag der Anmeldung: 28.02.2018
(73) Patentinhaber: Vitesco Technologies GmbH, 30165 Hannover (DE)
(72) Erfinder: PFEILSCHIFTER, Franz, 93059 Regensburg (DE); BRÜLL, Martin, 93092 Barbing (DE); FEUSTEL, Hans-Peter, 91154 Roth (DE); MÜHLBAUER, Klaus, 95688 Friedenfels (DE); RÖHRL, Thomas, 93092 Barbing (DE); SCHIRMER, Edmund, 90409 Nürnberg (DE); SPORNRAFT, Martin, 84056 Rottenburg (DE); TÖNS, Matthias, 93049 Regensburg (DE)
(86) Internationale Anmeldenummer: PCT/EP2016/057504
(87) Internationale Veröffentlichungsnummer: WO 2016/169766

(56) Entgegenhaltungen:
- WO-A1-2010/115867
- WO-A1-2010/115867
- WO-A1-2011/151131
- WO-A1-2011/151131
- WO-A1-2012/162570
- WO-A1-2012/162570
- DE-A1-102008 063 465
- DE-A1-102008 063 465
- US-A1- 2012 326 668
- US-A1- 2012 326 668

## Beschreibung

Die Erfindung betrifft das Gebiet der Elektromobilität und insbesondere die Anbindung bzw. funktionelle Integration von entsprechenden Fahrzeugen in elektrische Versorgungsnetze.

Die Komponenten eines Elektromobilitätssystems sind üblicherweise auf die Nutzung nur einer Stromart (d.h. Wechselstrom oder Gleichstrom) eingeschränkt. Zur Erzeugung eines elektromagnetischen Drehfelds muss notwendigerweise Wechselstrom verwendet werden, insbesondere bei der Verwendung von nicht kommutierenden elektrischen Maschinen, während etwa das Speichern von elektrischer Energie in einer Batterie oder das photovoltaische Erzeugen von elektrischer Energie die Verwendung von Gleichspannung erfordert. Bei einer Kopplung dieser unterschiedlichen Komponenten muss daher die Stromart (oder auch die Spannungshöhe) gewechselt werden, wodurch aufwendige leistungselektronische Stellglieder zur Wandlung elektrischer Energie ("Energiewandler") erforderlich werden, die mit hohen Kosten verknüpft sind. Ferner sind bei einer Kopplung unterschiedlicher Stromarten kostspielige elektronische Leistungsbauelemente zur Steuerung erforderlich.

Dokumente, die sich mit diesen Problemen beschäftigen, sind:
WO 2010/115867 A1 (SIEMENS AG [DE]; CORDES RALF [DE] ET AL.) 14. Oktober 2010 (2010-10-14);
DE 10 2008 063465 A1 (SIEMENS AG [DE]) 24. Juni 2010 (2010-06-24);
WO 2011/151131 A1 (SIEMENS AG [DE]; REISCHER WILHELM [AT]) 8. Dezember 2011 (2011-12-08);
US 2012/326668 A1 (BALLATINE ARNE [US] ET AL) 27. Dezember 2012 (2012-12-27);
WO 2012/162570 A1 (CAMERON D KEVIN [US]) 29. November 2012 (2012-11-29)

Es ist daher die Aufgabe der Erfindung, eine Möglichkeit aufzuzeigen, mit der sich Komponenten eines derartigen Systems mit geringerem Aufwand miteinander verbinden lassen.

### Offenbarung der Erfindung

Diese Aufgabe wird gelöst durch die Leistungsschaltung und durch das stationäre Energieversorgungssystem gemäß den unabhängigen Ansprüchen.

Es wird vorgeschlagen einen Gleichspannungsanschluss zur Anbindung externer Anlagen (etwa ein DC-Versorgungsnetz, etwa ein Inselnetz wie das einer Solaranlage) zu verwenden, der mit einem Verknüpfungspunkt verbunden ist, welcher einen DCDC-Wandler und einen DCAC-Wandler miteinander verbindet. Der DCDC-Wandler und der DCAC-Wandler sind vorzugsweise in einem Fahrzeug; insbesondere ist der Gleichspannungsanschluss fahrzeugseitig. Der DCAC-Wandler ist vorzugsweise ein Inverter, insbesondere ein Traktionsinverter, d.h. ein Inverter, der mit einer elektrischen Maschine oder einem Anschluss hierfür verbunden ist, wobei die elektrische Maschine Räder des Fahrzeugs antreibt. Der DCAC-Wandler kann allgemein ein Inverter einer elektrischen Maschine sein, insbesondere eines Motors (etwa ein Verbrennungsmotor-Starter oder ein Starter/Generator) oder der Inverter einer elektrischen Maschine eines Kompressors (etwa ein Klimakompressor oder ein Kompressor einer Verbrennungsmotor-Aufladevorrichtung).

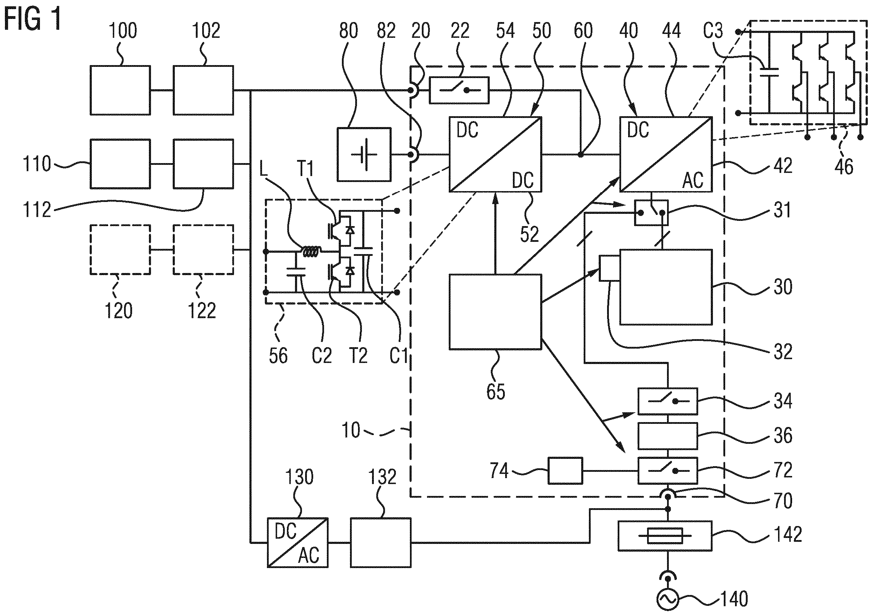

Ferner kann der DCAC-Wandler ein Inverter einer Ladevorrichtung sein. Die Ladevorrichtung wird hierbei gebildet von dem DCDC-Wandler, wie er etwa mit dem Bezugszeichen 50 in der Figur 1 dargestellt ist, und dem DCAC-Wandler, wie er etwa mit dem Bezugszeichen 40 in der Figur 1 dargestellt ist. Alternativ kann der DCAC-Wandler selbst die Ladevorrichtung realisieren (insbesondere ohne einen weiteren Wandler), wobei Energiespeicher über die Gleichstromseite des DCAC-Wandlers geladen werden, beispielsweise über den Gleichstromanschluss. Die letztgenannte Variante ermöglicht die Übertragung von Energie von einem fahrzeugseitigen elektrischen Energiespeicher in ein stationäres Gleichstromnetz.

Der DCDC-Wandler kann ein Wandler einer Ladevorrichtung sein oder kann ein Wandler für den DCAC-Wandler sein, welcher wiederum zum Anschluss einer elektrischen Maschine eingerichtet ist. Insbesondere ist der DCDC-Wandler ein Wandler einer Ladevorrichtung, die mit dem Verknüpfungspunkt bzw. mit dem DCAC-Wandler verbunden ist.

Es können ein oder mehrere DCDC-Wandler und/oder ein oder mehrere DCAC-Wandler an den Verknüpfungspunkt angeschlossen sein. Der DCAC-Wandler ist insbesondere eingerichtet, um einen Gleichstrom (auch DC-Strom genannt) bzw. eine Gleichspannung (auch DC-Spannung genannt) in einen Wechselstrom (auch AC-Strom genannt) oder in einer Wechselspannung (auch AC-Spannung genannt) umzuwandeln. Der DCAC-Wandler ist auch für die umgekehrte Richtung ausgestaltet und wird als bidirektionaler Wandler bezeichnet.

Der DCDC-Wandler ist vorzugsweise ein Wandler einer Ladevorrichtung. Der Verknüpfungspunkt des DCDC-Wandlers ist mit einem zu ladenden elektrischen Energiespeicher (stationär oder fahrzeuggebunden) verbunden, oder mit einem Anschluss hierfür (insbesondere bei einem stationären Energiespeicher).

Ferner weist die Leistungsschaltung eine elektrische Maschine oder einen Anschluss hierfür auf. Die Wechselstromseite des DCAC-Wandlers ist mit der elektrischen Maschine oder mit dem Anschluss hierfür verbunden. Der DCAC-Wandler bildet hierbei einen Inverter für die elektrische Maschine.

Durch die Einspeisung in einen derartigen zentralen Punkt, nämlich den Verknüpfungspunkt von DCDC-Wandler und DCAC-Wandler (bzw. dessen DC-Seite), können zahlreiche Komponenten effektiv genutzt werden. Es wird eine Leistungsschaltung vorgeschlagen, die sowohl bidirektional ist (und somit gleiche Komponenten bei unterschiedlichen Funktionen verwendet werden), und die ferner sowohl zum Laden als auch zur Traktion dient. Insbesondere der DCDC-Wandler kann bidirektional verwendet werden, so dass dessen Komponenten sowohl beim Laden eines (insbesondere fahrzeugseitigen) Energiespeichers als auch beim Entladen, d.h. beim Abrufen von Leistung zum Betrieb eines Traktionsantriebs verwendet werden können. Ferner kann der DCDC-Wandler eingerichtet sein, elektrische Energie von dem Gleichspannungsanschluss an einen (fahrzeugseitigen) Energiespeicheranschluss zu übertragen. Der DCDC-Wandler kann daher eingerichtet sein, elektrische Energie von dem Gleichspannungsanschluss aufzunehmen und umzuwandeln, wobei der DCDC-Wandler bidirektional ausgestaltet ist.

Ferner kann ohne weiteres ein (zusätzlicher) AC-Anschluss (auch als Wechselstromanschluss bezeichnet) integriert werden, wobei die Integration bis auf eventuell erforderliche Filter und/oder Auswahlschalter keine zusätzlichen Komponenten erfordert. Vielmehr ist es möglich, dass sowohl AC-Leistung (etwa eines allgemeinen Versorgungsnetzes) als auch DC-Leistung (etwa einer Photovoltaik-Anlage oder eines anderen DC-Inselnetzes) gleichzeitig zum Laden des elektrischen Energiespeichers verwendet wird. Es kann eine Auswahlautomatik vorgesehen sein, die eingerichtet ist, die an den Anschlüssen anliegende Spannung zu erfassen, um gemäß dem gewünschten Energiefluss die Spannung an dem Verknüpfungspunkt zu heben oder zu senken bzw. Betriebsparameters des Inverters gemäß dem gewünschten Energiefluss einzustellen. Insbesondere kann die Auswahlautomatik eingerichtet sein, zu erfassen, ob an dem AC-Anschluss ein- oder mehrere Phasen eines Wechselspannungssignals anliegt, um den Inverter (eingangsseitig) entsprechend einstellen zu können. Hierdurch wird die Anbindung deutlich vereinfacht, während mehrere Anschlussarten (AC oder DC) gleichzeitig oder wahlweise zur Verfügung stehen.

Es wird daher eine Leistungsschaltung zur Stromversorgung in einem elektrisch angetriebenen Fahrzeug beschrieben, die insbesondere in das Bordnetz des Fahrzeugs integriert ist. Die Leistungsschaltung umfasst einen Gleichspannungsanschluss, der insbesondere mit einer elektrischen Kupplung am Äußeren des Fahrzeugs verbindbar ist, so dass von außen ein elektrischer Kontakt mit der Leistungsschaltung hergestellt werden kann. Der Gleichspannungsanschluss dient zum Laden des Fahrzeugs, wobei jedoch auch in beide Richtungen Energie durch den Gleichspannungsanschluss fließen kann, etwa wenn eine Traktionsbatterie des Fahrzeugs zur Stützung eines angeschlossenen stationären Versorgungsnetzes (Inselnetz oder allgemeines Versorgungsnetz) verwendet wird. Der Gleichspannungsanschluss ist insbesondere gemäß einem Standard ausgebildet, etwa gemäß dem Standard IEC 60309 bzw. gemäß IEC 62196 (entspricht DIN EN 62196) oder gemäß einem CENELEC-Standard für Ladestecker oder -buchsen.

Der Gleichspannungsanschluss und ggf. der AC-Anschluss weisen ohmsche Kontakte auf. Anstatt oder in Kombination mit einer kabelbezogenen Schnittstelle kann eine induktive Schnittstelle vorgesehen sein. Diese induktive Schnittstelle kann eine (fahrzeugseitige) Sekundärspule einer induktiven Ladevorrichtung umfassen. Die induktive Schnittstelle kann an dem AC-Anschluss angeschlossen sein oder über einen eigenen Inverter und/oder Gleichrichter an den Gleichspannungsanschluss angeschlossen sein. Die Sekundärspule kann innerhalb eines Resonanzkreises vorgesehen sein, d.h. kann mit einem Kondensator zur Ausbildung des Resonanzkreises verbunden sein. Der Sekundärspule (allgemein: Spule zur induktiven Energieübertragung) kann ein Glättungskondensator nachgeschaltet sein, um Gleichspannung zu erzeugen, insbesondere wenn dies an dem Gleichspannungsanschluss angeschlossen ist. Werden sowohl ohmsche Kontakte (der elektrischen Kupplung) im Sinne einer ohmschen Schnittstelle als auch eine induktive Schnittstelle vorgesehen, so umfasst der Gleichspannungsanschluss bzw. der AC-Anschluss (vorzugsweise zusammen) einen (gemeinsamen) Umschalter (entsprechend einer Auswahlschaltung) oder eine Kombinationsschaltung zur Zusammenführung der beiden Schnittstellen, um beide Schnittstellen wählbar oder gemeinsam mit einem Verknüpfungspunkt zu verbinden, der im Weiteren näher erläutert wird. Es kann eine Ladeautomatik vorgesehen sein, die den betreffenden Anschluss (Gleichspannungsanschluss, AC-Anschluss; Anschluss der kabelbezogenen Schnittstelle, Anschluss der Sekundärspule) abtrennt, wenn an dem betreffenden Anschluss keine Spannung anliegt, bzw. die die spannungsführenden Anschlüsse anbindet.

Der (ohmsche) Gleichspannungsanschluss kann für eine Betriebsspannung von mehr als 60 V und insbesondere bis zu 600 V, 800 V der 1200 V ausgelegt sein. Alternativ kann der Gleichspannungsanschluss auch für Nennspannungen von 12 V, 24 V oder 48 V eingerichtet sein.

Die Leistungsschaltung umfasst ferner eine elektrische Maschine, insbesondere einen elektrischen Traktionsantrieb, einen Starter/Generator, eine elektrische Maschine eines (Klima- oder Aufladungs-) Kompressors oder zumindest einen Anschluss, der zur Verbindung mit einer elektrischen Maschine eingerichtet ist.

Eine Ausführungsform sieht vor, dass die elektrische Maschine einem Traktionsantrieb entspricht. Dieser ist mit den Rädern des Fahrzeugs kraftübertragend verbunden. Der Traktionsantrieb dient zur Traktion des Fahrzeugs entweder alleine oder in Kombination mit zumindest einem weiteren Antriebsaggregat, etwa einem Verbrennungsmotor. Der Traktionsantrieb umfasst die genannte elektrische Maschine, die gegebenenfalls eingerichtet ist, auch als Generator betrieben zu werden, etwa zur Rekuperation von kinetischer Energie des Fahrzeugs. Es kann sich um einen fremderregten (oder ggf. auch einen permanenterregten) Gleichstrommotor handeln, um eine Synchronmaschine (Drehstromsynchronmaschine oder einphasige Synchronmaschine) oder auch um eine Asynchronmaschine. Bevorzugt wird jedoch eine fremderregte Synchronmaschine verwendet, insbesondere eine fremderregte Drehstromsynchronmaschine.

Der Traktionsantrieb bzw. allgemein die elektrische Maschine ist vorzugsweise für eine Betriebsspannung mehr als 60 V und insbesondere von bis zu 350 V, 400 V, 600 V, 800 V der 1200 V ausgelegt. Alternativ kann der Traktionsantrieb für Nennspannungen von 12 V, 14V, 24 V, 36 V, 42 V oder 48 V ausgelegt sein.

Ferner ist die Leistungsschaltung wie erwähnt mit einem DCAC-Wandler ausgerüstet, insbesondere mit einem Inverter, der etwa mit dem Traktionsantrieb (oder mit einer andere elektrischen Maschine) verbunden ist, insbesondere mit den Statorphasen des Traktionsantriebs bzw. der elektrischen Maschine. Der Inverter bzw. DCAC-Wandler kann ein Traktionsinverter sein, oder kann ein Inverter eines Motors (etwa ein Verbrennungsmotor-Starter bzw. ein Starter/Generator eines Verbrennungsmotors) oder der Inverter eines Kompressors (etwa ein Klimakompressor oder ein Kompressor einer Verbrennungsmotor-Aufladevorrichtung) sein. Der Inverter kann als PFC-Inverter (PFC - Power Factor Correction) oder B6C-Inverter ausgestaltet sein. Der Inverter ist vorzugsweise mehrphasig ausgestaltet und umfasst Halbleiter-Schalteinrichtungen. Diese können etwa als B2-Brücke oder B6C-Brücke (allgemein: BnC mit n = 2 * Phasenanzahl) oder als H-Brücke geschaltet sein. Schaltelemente des Inverters können als IGBTs, vorzugsweise mit parallelen Dioden, oder MOSFETs ausgebildet sein. Eine bevorzugte Ausführungsform sieht vor, dass SiC-Leitungshalbleiterschalter verwendet werden. Dadurch kann der Inverter auch zur Erzeugung von Wechselströmen zur Anregung einer Spule für den Zweck der induktiven Übertragung verwendet werden. Die Halbleiter-Schalteinrichtungen sind vorzugsweise für eine Schaltfrequenz von bis zu 20 kHz ausgebildet, wobei vorzugsweise die maximale Schaltfrequenz der Halbleiter-Schalteinrichtungen (etwa bei MOSFETs) bis zu 100 kHz oder vorzugsweise bis zu 200 kHz betragen kann.

Der DCAC-Wandler (bzw. der Inverter) und insbesondere dessen AC-Seite ist entweder direkt mit dem Traktionsantrieb bzw. allgemein mit einer nachgeschalteten elektrische Maschine bzw. mit einem Wechselstromanschluss verbunden. Alternativ ist eine Auswahlschaltung vorgesehen, die den Inverter (insbesondere dessen Wechselspannungsseite) auswählbar mit einer elektrischen Maschine, einem internen Wechselspannungsanschluss, einem externen Wechselspannungsanschluss und/oder mit einer Spule zur induktiven Energieübertragung (bzw. einem entsprechenden Spulenanschluss) verbindet. Der Inverter und insbesondere dessen Wechselspannungsseite ist daher über eine sogenannte Auswahlschaltung mit dem Traktionsantrieb bzw. allgemein einer elektrischen Maschine verbindbar, wobei die Auswahlschaltung den Inverter (bzw. dessen AC-Seite) ausgewählt mit dem Traktionsantrieb (allgemein: elektrische Maschine), mit der ohmschen Schnittstelle, mit der induktiven Schnittstelle (insbesondere die Spule bzw. deren Spulenanschluss) und/oder mit einer fahrzeugseitigen Netzsteckdose (im Sinne des internen Wechselspannungsanschlusses) als interne Schnittstelle (d.h. für Komponenten innerhalb des Fahrzeugs) verbinden kann. Die ohmsche Schnittstelle und die induktive Schnittstelle können als externe Schnittstelle angesehen werden. Gemäß einer ersten Ausgestaltung verbindet die Auswahlschaltung hierbei den ACDC-Wandler (insbesondere dessen AC-Seite) immer nur mit einer dieser Komponenten (Traktionsantrieb bzw. allgemein elektrische Maschine, induktive Schnittstelle, ohmsche Schnittstelle, fahrzeugseitigen Netzsteckdose). Gemäß einer zweiten Ausgestaltung verbindet die Auswahlschaltung den Inverter mit einer oder mit mehreren der genannten Komponenten. Die zweite Ausgestaltung sieht insbesondere vor, dass die Auswahlschaltung den Inverter entweder mit dem Traktionsantrieb (bzw. allgemein mit einer elektrischen Maschine) oder mit einer oder mehreren der genannten (internen oder externen) Schnittstellen verbindet. Mit dieser Auswahlschaltung, die ein Multiplexen hinsichtlich der Verwendung des Inverters erlaubt, kann ein Wechselstromsignal
(i) zum Betrieb des Traktionsantriebs (allgemein einer elektrischen Maschine)
(ii) zum (bidirektionalen) Austausch von Energie zwischen einem fahrzeugseitigen elektrischen Energiespeicher und einem AC-Versorgungsnetz / Inselnetz über einen Wechselspannungsanschluss oder
(iii) zur Einspeisung von Leistung aus einem fahrzeugseitigen elektrischen Energiespeicher in ein Gleichstrom-Versorgungsnetz (Inselnetz) über die induktive oder ohmsche Schnittstelle erzeugt und ausgewählt übertragen werden.

Dadurch erhält der Traktionsinverter weitere Funktionen, die mit gegebenen Komponenten umgesetzt werden. Die fahrzeugseitige Netzsteckdose ist ausgestaltet wie Netzsteckdosen zum Anschluss von elektrischen Geräten an die unterste Verteilerebene eines Niederspannungsnetzes eines öffentlichen Stromnetzes, etwa gemäß den Standards NEMA oder CEE. Die fahrzeugseitige Netzsteckdose ist insbesondere einphasig, kann jedoch auch mehrphasig (dreiphasig) ausgestaltet sein.

Der Traktionsinverter ist vorzugsweise für eine Betriebsspannung mehr als 60 V und insbesondere von bis zu 350 V, 400 V, 600 V, 800 V der 1200 V ausgelegt. Der Traktionsinverter kann stattdessen auch für eine Betriebsspannung von 12 V, 14 V, 24 V, 36 V, 42 V oder 48 V ausgelegt sein. Der Traktionsinverter ist insbesondere bidirektional ausgebildet und kann daher sowohl Leistung von der AC-Seite an eine DC-Seite des Traktionsinverters übertragen, als auch Leistung in der umgekehrten Richtung übertragen.

Die Leistungsschaltung umfasst ferner einen DCDC-Wandler mit zwei Wandlerseiten. Der DCDC-Wandler ist bidirektional. Die Wandlerseiten können Hochvolt-Wandlerseiten sein. "Hochvolt" bedeutet eine Auslegung der betreffenden Komponenten für Betriebsspannungen von mehr als 60 V und insbesondere von bis zu 350, 400, 600, 800 V oder 1200 V. Die Wandlerseiten können jedoch auch für Betriebsspannungen von 12 V, 14 V, 24 V, 36 V, 42 V oder 48 V ausgelegt sein. Die erste der beiden Wandlerseiten ist über einen Verknüpfungspunkt (der Leistungsschaltung) mit einer Gleichspannungsseite des Traktionsinverters verbunden. Der Verknüpfungspunkt ist in einer vorzugsweise Zweileiter-Verbindung zwischen dem Traktionsinverter (Gleichspannungsseite) und der ersten Wandlerseite des DCDC-Wandlers vorgesehen. Die Zweileiter-Verbindung kann als Hochvolt-Verbindung ausgelegt sein, insbesondere für eine Betriebsspannung von mehr als 60 V oder 200 V und insbesondere von bis zu 400 V, 600 V, 800 V oder 1200 V. Alternativ ist die Zweileiter-Verbindung für eine Betriebsspannung von 12 V, 14 V, 24 V, 36 V, 42 V oder 48 V ausgelegt. An diese Verbindung bzw. an den Verknüpfungspunkt ist vorzugsweise ferner der Gleichspannungsanschluss angeschlossen. Dadurch kann Gleichspannungsleistung von außen ohne Wandlung direkt in den DCDC-Wandler eingespeist werden, um beispielsweise zum Laden eines fahrzeugseitigen elektrischen Energiespeichers verwendet werden zu können. In gleicher Weise kann Rekuperationsleistung des Traktionsantriebs (im Generatormodus) durch den Traktionsinverter hindurch an den DCDC-Wandler geleitet werden, der die Leistung als Gleichspannung an einen elektrischen Energiespeicher weitergeben kann, um diesen zu laden. Es sind daher keine externen Ladegeräte bei der Ladung mit Gleichstrom notwendig, da der bereits für die Übertragung von Rekuperationsleistung verwendete Wandler diese Funktion ebenso übernehmen kann. Dies schließt jedoch die Verwendung eines zusätzlichen Ladegeräts nicht aus. Da der DCDC-Wandler bidirektional ausgelegt ist, können dessen Komponenten zur Realisierung von weiteren Funktionen verwendet werden, wie es im Verlauf dieser Beschreibung näher dargestellt ist.

Gemäß einer Ausführungsform weist die Leistungsschaltung einen Energiespeicheranschluss auf. Die zweite Wandlerseite des DCDC-Wandlers ist mit dem Energiespeicheranschluss (vorzugsweise direkt) verbunden. Der Energiespeicheranschluss ist eingerichtet, an einen fahrzeugseitigen elektrischen Energiespeicher angeschlossen zu werden. Der Energiespeicher ist insbesondere ein Hochvolt-Energiespeicher, etwa eine Hochvolt-Traktionsbatterie (oder auch eine Kondensatorbank oder auch eine Kombination aus Kondensatorbank und Traktionsbatterie), die sich im Fahrzeug befindet. Anstatt eines Energiespeicheranschlusses kann die Leistungschaltung auch den Energiespeicher selbst umfassen, der mit der zweiten Wandlerseite des DCDC-Wandlers verbunden ist.

Eine weitere Ausführungsform der Leistungsschaltung sieht vor, dass der DCDC-Wandler zur bidirektionalen Energieübertragung zwischen den beiden Wandlerseiten, d.h. zwischen der ersten Wandlerseite und der zweiten Wandlerseite, eingerichtet ist. Der DCDC-Wandler ist insbesondere als Synchronwandler ausgestaltet. Dadurch ist die Leistungsschaltung in der Lage, über den DCDC-Wandler dem Energiespeicher Leistung wahlweise zu entnehmen oder diesem zuzuführen. Über den DCDC-Wandler kann der Energiespeicher aufgeladen werden, sowie über den Gleichspannungsanschluss (induktiv, ohmsch oder beide Schnittstellen) und über den Traktionsinverter (etwa bei Rekuperieren). Über den DCDC-Wandler kann dem Energiespeicher Energie entnommen werden, um diese dem Traktionsantrieb oder dem Gleichspannungsanschluss oder dem bereits erwähnten Wechselspannungsanschluss zuzuführen. Über den Gleichspannungsanschluss oder den Wechselspannungsanschluss können stationäre Gleichstrom- oder Wechselstromversorgungsnetze oder -inselnetze Energie aus dem fahrzeugseitigen Energiespeicher erhalten. Für diese Funktionen werden dieselben Komponenten des DCDC-Wandlers verwendet, wodurch sich insbesondere auf stationärer Seite (aber auch fahrzeugseitig) gegenüber bekannten Schaltungen Komponenten einsparen lassen.

Weiterhin kann vorgesehen sein, dass die Leistungsschaltung einen Wechselspannungsanschluss z.B. für ein öffentliches Stromnetz (insbesondere die unterste Verteilerebene eines Niederspannungsnetzes eines öffentlichen Stromnetzes) aufweist, insbesondere den bereits erwähnten Wechselspannungsanschluss. Dieser ist mit der AC-Seite (d.h. Wechselspannungsseite) des DCAC-Wandlers verbunden. Der Wechselspannungsanschluss ist insbesondere gemäß einem Standard ausgebildet, etwa gemäß dem Standard IEC 60309 bzw. gemäß IEC 62196 (entspricht DIN EN 62196) oder gemäß einem CENELEC-Standard für Ladestecker oder -buchsen. Dieser Wechselspannungsanschluss (auch AC-Anschluss genannt) ist insbesondere über einen Auswahlschalter mit der Wechselspannungsseite des DCAC-Wandlers verbunden. Zwischen Wechselspannungsanschluss und DCAC-Wandler können ferner ein EMV-Filter und/oder mindestens ein (serieller) Trennschalter vorgesehen sein.

Eine weitere Möglichkeit ist es, den Gleichspannungsanschluss, gegebenenfalls den Wechselspannungsanschluss und/oder den Batterieanschluss mit einem Trennschalter (wie vorangehend bemerkt) auszustatten. Anstatt oder in Kombination mit dem Trennschalter kann eine Überlastsicherung verwendet werden, um die Anschlüsse zu schützen.

Der Gleichspannungsanschluss und der Wechselspannungsanschluss können in einer gemeinsamen, elektrischen Verbindungskomponente integriert sein. Hierbei können der Gleichspannungsanschluss und der Wechselspannungsanschluss als Kontakte einer gemeinsamen Steckverbindungskomponente ausgebildet sein. Diese Steckverbindungskomponente ist gemäß einem Standard ausgebildet, etwa gemäß dem Standard IEC 60309 bzw. gemäß IEC 62196 (entspricht DIN EN 62196) oder gemäß einem CENELEC-Standard für Ladestecker oder -buchsen.

Weiterhin können der Traktionsinverter, der DCDC-Wandler oder beide dieser Komponenten ausgebildet sein, eine steuerbar veränderliche Gleichspannung an dem Verknüpfungspunkt zu erzeugen. Dadurch lässt sich die Ausgangsspannung des DCDC-Wandlers bzw. des Traktionsinverters einstellen, so dass ein Abgleich mit dem Spannungspegel am Gleichspannungsanschluss stattfinden kann, etwa wenn der Spannungspegel am Gleichspannungsanschluss durch ein dort angeschlossenes Versorgungsnetz / Inselnetz vorgegeben ist und die am Gleichspannungsanschluss an diese anzupassen ist. Die bereits erwähnte Steuereinrichtung kann mit dem Traktionsinverter bzw. mit dem DCDC-Wandler derart ansteuernd verbunden sein, dass die Steuereinrichtung die Gleichspannung an der ersten Wandlerseite des DCDC-Wandlers bzw. an der DC-Seite des Traktionsinverters einstellen kann. Wie bereits angemerkt, ist der Traktionsinverter vorzugsweise bidirektional ausgebildet, insbesondere um den daran angeschlossenen Traktionsantrieb als Motor und als Generator betreiben zu können bzw. um in die zwei entgegengesetzten Richtungen Leistung übertragen zu können.

Weiterhin kann die Leistungsschaltung oder der Traktionsinverter mit einer Leistungserfassungseinrichtung ausgestattet sein. Die Leistungserfassungseinrichtung ist eingerichtet, die Energie (oder auch Leistung), welche durch den Traktionsinverter fließt, für beide Flußrichtungen jeweils zu ermitteln. Die Leistungserfassungseinrichtung kann mit der Steuereinrichtung verbunden sein, insbesondere um ein Signal oder mehrere Signale zu empfangen, das die ermittelte Energie oder Leistung wiedergibt. Ferner kann alternativ oder zusätzlich der DCDC-Wandler mit einer derartigen Leistungserfassungseinrichtung ausgestaltet sein. Die Leistungserfassungseinrichtung kann mit einer Kommunikationsschnittstelle versehen sein, die etwa mit einer Ladesäule, welche über den Gleichspannungsanschluss oder den Wechselstromanschluss angeschlossen ist, kommunizieren kann, etwa zur Kostenabrechnung, zur Fahrer- und/oder Fahrzeug-Identifikation, oder zur Übermittlung der von der Leistungserfassungseinrichtung erfassten (geladenen und/oder entladenen) Energie. In gleicher Weise kann die Leistungserfassungseinrichtung dazu dienen, die an den Gleichspannungsanschluss oder an den Wechselstromanschluss übertragene Energie zu erfassen. Ferner kann anstatt oder in Kombination zur Energie die Leistung (als Wert) übertragen werden, etwa um den Energiefluss zu steuern, etwa zur Begrenzung nach oben.

Nachdem beschrieben wurde, den Verknüpfungspunkt bzw. die Verbindung zwischen einem fahrzeugseitigen DCDC-Wandler und einem Inverter zu verwenden, um direkt einen Gleichstromanschluss (zum Anschluss stationärer Einrichtungen) mit diesem Verknüpfungspunkt zu verbinden, wird im Folgenden die hierzu komplementäre Ausführung beschrieben. In beiden Ausführungen wird durch die direkte Einspeisungsmöglichkeit oder Abgriffmöglichkeit direkt vom DCDC-Wandler und gleichzeitig direkt vom Inverter (d.h. am Verknüpfungspunkt) ermöglicht, dass zahlreiche Komponenten bei unterschiedlichen Funktionen wiederverwendet werden.

Es wird daher ein stationäres Energieversorgungssystem beschrieben. Dieses weist eine Gleichstrom-Leitung, eine elektrische Energiequelle (die vorzugsweise regenerativ ist, etwa eine Photovoltaikanlage), einen Energiequelle-DCDC-Wandler, der die Energiequelle mit der Gleichstrom-Leitung verbindet, und der insbesondere bidirektional ist, einen Inverter, der an die Gleichstrom-Leitung angeschlossen ist, und einen Gleichspannungsanschluss auf.

Der Gleichspannungsanschluss ist an ein elektrisch angetriebenes Fahrzeug angeschlossen, das die hier beschriebene Leistungsschaltung aufweist. Der Gleichspannungsanschluss kann als Steckverbindungskomponente ausgebildet sein und entspricht vorzugsweise einem Standard, etwa dem Standard IEC 60309 bzw. IEC 62196 (entspricht DIN EN 62196) oder einem CENELEC-Standard für Ladestecker oder -buchsen. Der Gleichspannungsanschluss des stationären Energieversorgungssystems ist komplementär zum Gleichspannungsanschluss der Leistungsschaltung ausgebildet; insbesondere können beide miteinander trennbar verbunden werden.

Es kann eine Datenschnittstelle vorgesehen sein, die in den Gleichspannungsanschluss integriert ist, oder die als Funkschnittstelle ausgebildet ist, etwa als Nahbereichsfunkschnittstelle (WLAN, Bluetooth,...), oder die als Car-to-X-Kommunikationsschnittstelle (etwa IEEE 802.11p) ausgebildet ist. Die Datenschnittstelle kann gemäß einem Standard nach IEEE 802.11 ausgestaltet sein. Die Datenschnittstelle ist dafür vorgesehen, Betriebsparameter wie maximaler Ladestrom, Ladezustand, Ladedauer und anderes zu übermitteln. Der Gleichspannungsanschluss des stationären Energieversorgungssystems ist direkt mit der Gleichstrom-Leitung verbunden. Der Gleichspannungsanschluss kann ferner direkt mit einer elektrischen Energiequelle (etwa eine stationäre Batterie oder eine Brennstoffzelle) verbunden sein. Diese elektrische Energiequelle kann eine Datenschnittstelle aufweisen, die wie die vorangehend dargestellte Datenschnittstelle ausgebildet ist.

Der Inverter arbeitet als bidirektionaler Wechselrichter. Der Inverter des stationären Energieversorgungssystems arbeitet insbesondere als bidirektionaler Wechselrichter. Der Inverter weist eine AC-Seite auf, die insbesondere eingerichtet ist, an ein Versorgungsnetz angeschlossen zu werden. Der Inverter weist eine DC-Seite auf, die mit der Gleichstrom-Leitung verbunden ist.

Die Gleichstrom-Leitung kann eine Hochvolt-Nennbetriebsspannung auf, d.h. eine Nennbetriebsspannung von mindestens 60 V und bis zu 220 V, 350 V, 400 V, 600 V, oder 800 V. Alternativ kann die Gleichstrom-Leitung eine Nennbetriebsspannung von 12 V, 14V, 24 V, 36 V, 42 V, oder 48 V aufweisen. Die Komponenten, welche mit der Gleichstrom-Leitung verbunden sind, sind mit einer entsprechenden Nennbetriebsspannung versehen.

Die Gleichstrom-Leitung bildet einen stationären Gleichstromzwischenkreis, an den der Inverter (zur Anbindung eines Wechselstrom-Versorgungsnetzes) angeschlossen ist, und an den ein Inselnetz (insbesondere eine Photovoltaikanlage) angeschlossen werden kann. Das Inselnetz ist somit ebenso über den Inverter an das allgemeine Wechselstrom-Versorgungsnetz angeschlossen. Die direkte Anbindung an ein Fahrzeug mit elektrischem Traktionsantrieb (d.h. mit Hochvolt-Energiespeicher) ist über den Gleichspannungsanschluss des stationären Energieversorgungssystems gegeben. Der Energiequelle-DCDC-Wandler erlaubt eine Anbindung eines Inselnetzes mit schwankendem Spannungsniveau (oder auch nur eine Energiequelle eines Inselnetzes, etwa eine Photovoltaikanlage) an die Gleichstrom-Leitung.

Das stationäre Energieversorgungssystem kann einen Versorgungsnetzanschluss aufweisen, der direkt mit dem Inverter (mit dessen DC-Seite) verbunden ist. Der Versorgungsnetzanschluss kann direkt oder über ein Netzfilter mit einem elektrischen (allgemeinen) Versorgungsnetz verbunden sein. Das allgemeine Versorgungsnetz ist vorzugweise nicht Teil des stationären Energieversorgungssystems, sondern es ist lediglich ein Versorgungsnetzanschluss seitens des stationären Energieversorgungssystems vorgesehen, das an das allgemeine Versorgungsnetz angeschlossen werden kann.

Das stationäre Energieversorgungssystem kann ferner einen Wechselspannungsanschluss aufweisen, der insbesondere komplementär zum vorangehend beschriebenen Wechselspannungsanschluss der Leistungsschaltung ist. Beide Wechselspannungsanschlüsse können beide miteinander trennbar verbunden werden. Der Wechselspannungsanschluss des stationären Energieversorgungssystems ist zum Anschluss eines elektrisch angetriebenen Fahrzeugs eingerichtet, insbesondere über den Wechselspannungsanschluss der Leistungsschaltung der Leistungsschaltung. Der Wechselspannungsanschluss des stationären Energieversorgungssystems ist mit dem Wechselstrom-Versorgungsnetz verbunden, vorzugsweise über Trennschalter und/oder Sicherungen. Der Wechselspannungsanschluss ist insbesondere mit dem Versorgungsnetzanschluss verbunden.

Das stationäre Energieversorgungssystem kann zudem einen stationären elektrischen Energiespeicher aufweisen. Weiterhin kann das stationäre Energieversorgungssystem einen Speicher-DCDC-Wandler aufweisen. Dieser Wandler ist insbesondere bidirektional ausgelegt. Der Speicher-DCDC-Wandler verbindet den stationären elektrischen Energiespeicher mit der Gleichstrom-Leitung.

Anstatt des Inselnetzes oder in Kombination mit dem Inselnetz können Brennstoffzellen (oder andere Gleichspannungsquellen) vorgesehen sein, die über einen eigenen DCDC-Wandler mit der Gleichstrom-Leitung verbunden sind.

Komplementär hierzu kann die Leistungsschaltung einen weiteren DCDC-Wandler und eine daran angeschlossene Gleichspannungsquelle wie eine zweite Batterie umfassen, wobei der weitere DCDC-Wandler die Gleichspannungsquelle mit dem Verknüpfungspunkt verbindet. Es kann als Gleichspannungsquelle auch ein Range-Extender (mit Gleichrichter) vorgesehen sein. Zudem kann ein Range-Extender vorgesehen sein, dessen Generator direkt mit dem AC-Anschluss oder mit der AC-Seite des Inverters verbunden ist.

Die hier beschriebenen DCDC-Wandler des stationären Energieversorgungssystems weisen zwei Hochvolt-DC-Seiten auf.

Die hier beschriebenen Inverter und/oder Wandler sind für Leistungen von mindestens 5 kW und vorzugsweise von mindestens 10, 20, 30, 50, 70 oder 100 kW ausgestaltet. Die Leistung beträgt insbesondere weniger als 500 kW, vorzugsweise weniger als 200 kW oder nicht mehr als 100 kW.

Der Inverter des stationären Energieversorgungsystems und insbesondere dessen AC-Seite sind vorzugsweise mehrphasig ausgebildet, insbesondere zum Anschluss an ein dreiphasiges Drehstromsystem. Der Wechselspannungsanschluss des stationären Energieversorgungsystems ist ebenso vorzugsweise mehrphasig ausgebildet, insbesondere zum Anschluss an ein dreiphasiges Drehstromsystem. Es kann sich ein Netzfilter zwischen dem Inverter des stationären Energieversorgungsystems und dem Versorgungsnetzanschluss befinden, vorzugsweise eine mehrphasiger (etwa dreiphasiger) Netzfilter.

### Kurzbeschreibung der Zeichnungen

Die Figur 1 zeigt eine beispielhafte Leistungsschaltung zur Erläuterung von Ausführungsformen der Erfindung.
Die Figur 2 zeigt ein beispielhaftes stationäres Energieversorgungsystem zur Erläuterung von Ausführungsformen der Erfindung.
Die Figur 3 zeigt eine weitere beispielhafte Leistungsschaltung insbesondere zur Erläuterung einer automatischen Konfiguration.

### Detaillierte Beschreibung der Zeichnung

In der Figur 1 ist eine Leistungsschaltung 10 dargestellt, die einen Gleichspannungsanschluss 20, einen elektrischen Traktionsantrieb 30 (als Platzhalter für die allgemein erwähnte elektrische Maschine), einen Inverter 40 und einen DCDC-Wandler 50 umfasst. Der DCAC-Wandler bzw. Inverter 40 (im Folgenden aufgrund des in der Figur gewählten Beispiels als Traktions-inverter bezeichnet) hat eine Wechselspannungsseite 42, die auch als AC-Seite bezeichnet werden kann, sowie eine Gleichspannungsseite 44, die als DC-Seite bezeichnet werden kann. Der DCDC-Wandler 50 hat zwei Hochvolt-Wandlerseiten 52, 54, wobei eine erste Wandlerseite 52 dieser Hochvolt-Wandlerseiten leistungsübertragend mit der Gleichspannungsseite 44 des Traktionsinverter 40 verbunden ist. Die Verbindung zwischen der ersten Wandlerseite 52 des DCDC-Wandlers 50 und der Gleichspannungsseite 44 des Traktionsinverters 40 weist einen Verknüpfungspunkt 60 auf, mit dem der Gleichspannungsanschluss 20 (über einen optionalen DC-Trennschalter 22) verbunden ist. Mit anderen Worten ist der Gleichspannungsanschluss 20 mit der ersten Wandlerseite 52 des DCDC-Wandlers 50 sowie mit der Gleichspannungsseite 44 des Traktionsinverters 40 leistungsübertragend verbunden. Die genannte Verbindung bzw. der Verknüpfungspunkt kann als Zwischenkreis zwischen Traktionsinverter 40 und DCDC-Wandler 50 angesehen werden, an den der Gleichspannungsanschluss 20 angeschlossen ist. Beide Seiten des DCDC-Wandlers 50 arbeiten im Hochvoltbereich mit den eingangs genannten Betriebsspannungen, die mit der Vorsilbe "Hochvolt" verknüpft sind, wobei jedoch auch Betriebsspannungen (wie eingangs erwähnt) außerhalb des Hochvoltbereichs denkbar sind.

Der Traktionsinverter (allgemein: der DCAC-Wandler) und der DCDC-Wandler sind bidirektional. Eine Detaildarstellung 56 des DCDC-Wandlers zeigt dessen prinzipiellen Aufbau mit einem ersten Glättungskondensator C1, einem Halbleiterschalter mit zwei Transistoren, die insbesondere als n-MOSFETs ausgebildet sind, wobei auch Realisierungen als SiC-Leistungshalbleiter oder IGBT in Frage kommen. Es sei ferner auf die dargestellten Substratdioden der Transistoren verwiesen, sowie auf deren Durchlassrichtungen, die zum positiven Potential weisen. Anstatt von n-MOSFETs können auch IGBTs (wie dargestellt) als Halbleiterschalter verwendet werden. Die Halbleiterschalter sind seriell verbunden. An den sich durch diese Verbindung ergebenden gemeinsamen Verknüpfungspunkt ist eine Induktivität seriell verbunden, wobei an der (zu den Halbleiterschaltern) entgegengesetzten Seite ein zweiter Glättungskondensator C2 angeschlossen ist. Die erste Wandlerseite 52 des DCDC-Wandlers 50 (bzw. die Anschlüsse der ersten Wandlerseite) wird/werden durch die Anschlüsse des ersten Glättungskondensators C1 gebildet. Die zweite Wandlerseite 54 des DCDC-Wandlers 50 (bzw. die Anschlüsse der zweiten Wandlerseite) wird/werden durch die Anschlüsse des ersten Glättungskondensators C2 gebildet. Die Glättungskondensatoren sind jeweils als Parallelkondensator geschaltet. Es ergibt sich ein Synchronwandler. Die Anschlüsse bzw. die Wandlerseiten des DCDC-Wandlers 50 sind für zwei Spannungspotentiale (Pluspol/Minuspul oder Pluspol/Masse) vorgesehen.

Eine Detaildarstellung 46 des Traktionsinverters 40 (allgemein: der DCAC-Wandlers) zeigt eine B6C-Brücke mit einem parallel geschalteten Glättungskondensator C3, der sich an der DC-Seite 44 (bzw. an den Anschlüssen der DC-Seite) des Traktionsinverters 40 befindet. Ausgehend von dem Glättungskondensator C3 sind zur AC-Seite hin steuerbare Halbleiterschalter in drei einzelnen Phasen in Brückenschaltung (d.h. in einer sogenannten B6C-Schaltung) vorgesehen. Für jede der drei Phasen sind zwei seriell geschaltete Halbleiterschalter vorgesehen, an deren Verknüpfungspunkt die einzelnen Phasenleiter der AC-Seite abgehen. Die AC-Seite 42 (bzw. deren Anschlüsse) ist bzw. sind somit dreiphasig. Der Traktionsinverter 40 ist bidirektional ausgestaltet. Die Halbleiterschalter des Traktionsinverters 40 können als IGBTs, SiC-Leistungshalbeiter oder n-MOSFETs realisiert sein. Insbesondere können die Halbleiterschalter können jeweils mit einer antiparallel geschalteten Diode versehen sein, die die zu schaltenden Anschlüsse verbindet. Die Dioden weisen eine Durchlassrichtung auf, die zum Pluspol (der DC-Seite 44) weist. Bei der Verwendung von SiC-Leistungshalbleitern innerhalb des Traktionsinverters 40 (allgemein: des DCAC-Wandlers) kann dieser aufgrund der hohen (maximalen) Schaltfrequenzen der Inverter 40 auch zur Erzeugung eines Stroms zum induktiven Laden verwendet werden, dessen Frequenz im Bereich von 100 kHz oder höher liegen kann.

Die Leistungsschaltung 10 kann eine Steuereinrichtung 65 aufweisen, die den DCDC-Wandler und den Traktionsinverter und insbesondere deren Halbleiterschalter steuert.

An dem Traktionsantrieb 30 sind ferner Trennschalter 34 vorgesehen, die wie auch die hierzu an alternativer angebrachter Position vorgesehenen Trennschalter 72 die elektrische Maschine von dem Wechselstromanschluss 70 abtrennen können. Dem DCAC-Wandler 40 bzw. dessen AC-Seite ist ein Auswahlschalter 31 nachgeschaltet. Der gemeinsame Anschluss des Auswahlschalters 31, der sich wahlweise mit einem (oder auch mehreren) Einzelanschlüssen des Auswahlschalters 31) verbinden lässt, ist mit dem DCAC-Wandler 40 bzw. dessen AC-Seite 42 verbunden. Einer der Einzelanschlüsse, die sich gesteuert mit dem gemeinsamen Anschluss des Auswahlschalters verbinden lassen, ist mit der elektrischen Maschine 30 verbunden. Ein weiterer der Einzelanschlüsse ist mit dem AC-Anschluss 70 verbunden, insbesondere über den Trennschalter 34 und/oder den Trennschalter 72, und ferner vorzugsweise über den EMV-Filter 36. Der Auswahlschalter, die betreffenden Verbindungen, der oder die Trennschalter und der EMV-Schalter sind ein oder mehrphasig ausgestaltet.

Auf der Seite des EMV-Filters 36, die dem Traktionsantrieb 30 abgewandt ist, befindet sich ein Wechselspannungsanschluss 70, der über den seriellen Trennschalter 72 mit dem EMV-Filter 36 (bzw. indirekt) mit dem Traktionsantrieb 30 verbunden ist. In jeder Phase ist ein einzelner Trennschalter seriell angeschlossen. Bei offenen Trennschaltern 70 ist die Kondensatorbank 36 bzw. der Traktionsantrieb 30 von dem Wechselstromanschluss 70 getrennt. Sind die Trennschaltern 70 geschlossen, dann ist die Kondensatorbank bzw. (indirekt) der Traktionsantrieb 30 an den Wechselstromanschluss 70 angeschlossen.

Der Trennschalter 34 ist zwischen Kondensatorbank 36 und elektrischer Maschine geschaltet und bildet eine Alternative zu dem Trennschalter 72, welcher zwischen der Kondensatorbank 36 und dem Wechselstromanschluss 70 angeschlossen sind. Es sind daher beide Positionen (34 und 72) für die Schalter gleicher Funktion ("Trennschalter") dargestellt.

Der Trennschalter 72, welcher dem Wechselspannungsanschluss 70 zugeordnet werden kann, sowie der alternative Trennschalter 34 dienen der Unterbrechung der Phasen bzw. der Verbindung zwischen der elektrischen Maschine 30 und dem Wechselspannungsanschluss 70. Der Trennschalter 34 und der Trennschalter 72 befinden sich innerhalb des Fahrzeugs, so dass sich die Leistungsschaltung gegenüber äußeren Einflüssen durch Betätigen des Trennschalters selbst schützen kann.

Die Steuereinrichtung 65 kann hierzu Betriebsparameter wie die Stromstärke des Stroms, der durch eine Komponente der Leistungsschaltung fließt, oder die Temperatur einer dieser Komponenten Erfassung und bei Überschreiten eines vorgegebenen Grenzwerts den Trennschalter aktivieren. Der Trennschalter 34 und der Trennschalter 72 können als Wechselspannungs-Abkoppelschalter bezeichnet werden, um deren Funktion näher darzustellen. Die Steuereinrichtung 65 kann ansteuernd mit den Trennschaltern 34 und 72 verbunden sein.

Die dargestellten Pfeile zeigen die ansteuernde Verbindung der Steuereinrichtung 65 zu den betreffenden Komponenten, und stellen eine Steuersignalübertragung dar. Insbesondere ist die gesteuerte Verbindung zwischen Steuereinrichtung 65 einerseits und dem Trennschalter 72, dem Trennschalter 34, und dem Auswahlschalter 31 dargestellt.

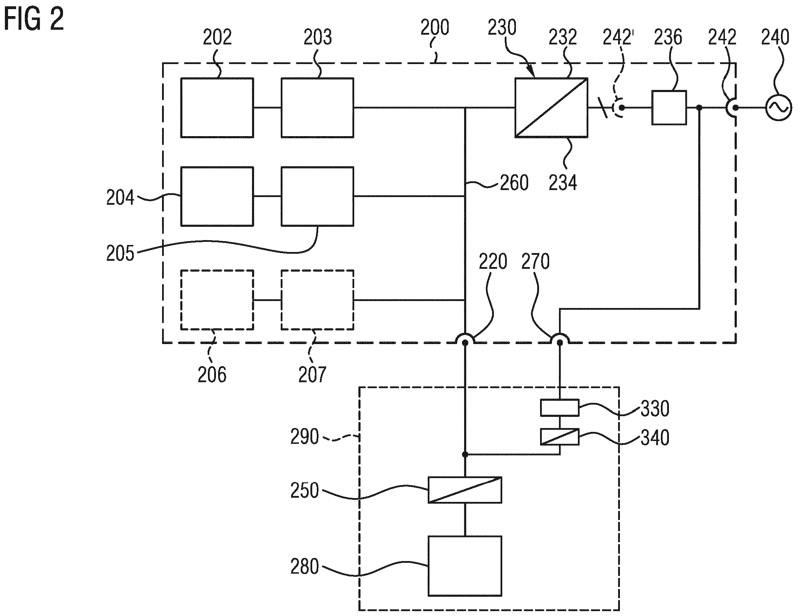

Die dargestellten durchgezogenen Linien (ohne weitere Markierung) stellen leistungsübertragende Gleichspannungsverbindungen dar, die als Zweileitersystem ausgebildet sind. Die dargestellten durchgezogenen Linien, welche mit einem Schrägstrich markiert sind, stellen leistungsübertragende Wechselspannungsverbindungen dar, die insbesondere dreiphasig sind. Dies trifft auch für die Figur 2 zu. Die Punktlinie der Figur 1 gibt die Zugehörigkeit von Komponenten zu der Leistungsschaltung an.

Eine optional zur Leistungsschaltung 10 gehörende Traktionsbatterie 80 ist über einen elektrischen Energiespeicheranschluss 82 der Leistungsschaltung 10 an diese angeschlossen. Der Energiespeicheranschluss 82 ist mit der zweiten Wandlerseite 54 (auf Hochvolt-Spannungsniveau) des DCDC-Wandlers 50 verbunden. Eine fahrzeugseitige Netzsteckdose 74 kann dem Trennschalter 72 und allgemein dem DCAC-Wandler bzw. Inverter 40 (bzw. dessen Wechselspannungsseite 42) nachgeschaltet sein. Hierbei kann der DCAC-Wandler 40 als Inverter zur Erzeugung einer für öffentliche Versorgungsnetze übliche Wechselspannung (etwa 110 oder 230 V bei 50 bzw. 60 Hz) verwendet werden. Zwischen dem Trennschalter 72 einerseits und dem externen Anschluss (Wechselspannungsanschluss 70) und/oder dem internen Anschluss (fahrzeugseitige Netzsteckdose 74) kann eine Auswahlschaltvorrichtung vorgesehen sein. Eine derartige Auswahlschaltvorrichtung kann von dem Auswahlschalter 31 realisiert werden, kann jedoch auch von einem (nicht dargestellten) weiteren Auswahlschalter zwischen EMV-Filter 36 und AC-Anschluss 70 vorgesehen sein. Hierbei kann der nicht dargestellte weitere Auswahlschalter an der Stelle des Trennschalters 72 vorgesehen sein, oder mit diesem zusammen realisiert sein. Eine derartige Auswahlschaltvorrichtung ist vorzugsweise mit der Steuereinrichtung 65 ansteuernd verbunden. Der weitere Auswahlschalter kann allgemein zwischen der Wechselspannungsseite 42 des Traktionsinverters 40 einerseits und den Anschlüssen 70 bzw. 74 andererseits vorgesehen sein.

Es können zwischen dem Traktionsinverter 40 und den Anschlüssen 70 bzw. 74 Sicherungen und/oder Netzfilter vorgesehen sein, beispielsweise zwischen der Auswahlschaltung (siehe etwa Auswahlvorrichtung oder Auswahlschalter 31 oben) und dem Traktionsinverter 40 oder zwischen der Auswahlschaltung und den Anschlüssen (d.h. der Netzsteckdose bzw. dem Wechselspannungsanschluss 70).

Es kann ferner eine fahrzeugseitige Spule einer induktiven Koppeleinrichtung vorgesehen sein, oder ein Anschluss hierfür. Die Spule bzw. der zugehörige Anschluss kann direkt oder indirekt der Wechselspannungsseite 42 nachgeschaltet sein. Die Spule bzw. deren Anschluss kann ferner über einen zusätzlichen (vorzugsweise bidirektionalen) Inverter, der zur Spulenstromerzeugung verwendet wird, an den Gleichstromanschluss 82 oder an den Verknüpfungspunkt 60 angeschlossen sein.

Aus der Topologie ergeben sich folgende mögliche Leistungsflüsse:
- von dem Gleichspannungsanschluss 20 über den DCDC-Wandler 50 an den Energiespeicheranschluss 82 (Laden des fahrzeugseitigen Energiespeichers, Gleichspannung)
- von dem Energiespeicheranschluss 82 über den DCDC-Wandler 50 an den Gleichspannungsanschluss 20 (Stützung eines externen Versorgungsnetzes aus dem fahrzeugseitigen Energiespeicher)
- von dem Energiespeicheranschluss 82 über den DCDC-Wandler 50 und den Traktionsinverter 40 an die Netzsteckdose 74 oder an eine dem Traktionsinverter 40 nachgeschaltete Spule zur induktiven Übertragung von Energie (oder an deren Anschluss)
- von dem Gleichspannungsanschluss 20 über den DCDC-Wandler 50 und dem Inverter 40 an den Wechselspannungsanschluss 70 (oder an die Netzsteckdose 74 oder an eine dem Traktionsinverter 40 nachgeschaltete Spule). Bei dieser Anwendung dient die Leistungsschaltung als "mobiler Wechselrichter", etwa um Gleichspannung einer Photovoltaikanlage in ein öffentliches Netz (oder ein lokales Wechselstromnetz) einzuspeisen.

Die Steuereinrichtung 65 ist eingerichtet, die Komponenten, welche von ihr gesteuert werden, gemäß zumindest einem und vorzugsweise gemäß aller dieser Leistungsflüsse anzusteuern.

Es sind weitere Anwendungen möglich, insbesondere die im weiteren Verlauf dieser Beschreibung genannten Fälle, etwa das parallele Wechselstrom- und Gleichstromladen. Der externe Energiespeicher kann auch der elektrische Energiespeicher eines weiteren Fahrzeugs sein, so dass der letztgenannte Fall die Übertragung von Energie von einem Fahrzeug zu einem anderen Fahrzeug betrifft.

Vorzugsweise ist die Leistungsschaltung 10 eingerichtet, Betriebsparameter wie anliegende Spannungsart und/oder Spannungsniveau zu erfassen, um zumindest eine Komponente der Leistungsschaltung gemäß einer der hierin genannten Anwendungen bzw. Leistungsflüsse zu konfigurieren. Dies geschieht vorzugsweise automatisch, d.h. ohne Benutzereingabe. Die Leistungsschaltung kann eingerichtet sein, bei mehreren möglichen Anwendungen oder Leistungsflüsse an einer Benutzerschnittstelle die möglichen Konfigurationen (oder Anwendungen oder Leistungsflüsse) darzustellen und eine vom Nutzer gewählte Möglichkeit zu erfassen.

Die Leistungsschaltung ist insbesondere eingerichtet, die vorangehend genannten Betriebsparameter an den Anschlüssen, insbesondere an den externen Anschlüssen wie der Gleichspannungsanschluss 20, der Wechselspannungsanschluss 70, der Energiespeicheranschluss 82 und/oder ein Anschluss zur Anbindung einer Spule zur induktiven Energieübertragung zu erfassen. Es kann beispielsweise ermittelt werden, ob an den betreffenden Anschlüssen Spannung anliegt. Alternativ oder in Kombination hiermit kann die Leistungsschaltung 10 eingerichtet sein, die Betriebsparameter innerhalb der Leistungsschaltung 10 zu erfassen, insbesondere die Spannung an dem Verknüpfungspunkt 60, an einer Seite (Seite 42 und/oder 44) des Traktionsinverters 40, oder an dem EMV-Filter 36. Hierzu kann die Leistungsschaltung 10 eine Spannungserkennungseinheit aufweisen. Diese kann mit der Steuereinrichtung 65 gekoppelt sein oder Teil dieser Steuereinrichtung 65 sein.

Wie bereits erwähnt kann die Leistungsschaltung 10 eine Auswahlschaltung aufweisen, insbesondere eine Auswahlschaltung zwischen mehreren Anschlüssen, die über die Auswahlschaltung mit dem Gleichspannungsanschluss 20 verbunden sind. Diese Anschlüsse sind insbesondere die ohmschen Schnittstelle und die induktive Schnittstelle. Alternativ oder in Kombination hierzu kann eine Auswahlschaltung zwischen mehreren Anschlüssen und dem Wechselstromanschluss 70 vorgesehen sein. Die letztgenannten Anschlüsse sind insbesondere ein Anschluss an ein Wechselspannungs-Versorgungsnetz 140, die fahrzeugseitige Netzsteckdose 74 und/oder ein Anschluss an eine Spule zu induktiven Energieübertragung. Die Steuereinrichtung 65 ist eingerichtet, diese Auswahlschaltung bzw. Auswahlschaltungen gemäß einer der Leistungsflüsse, Anwendungen oder Konfigurationen einzustellen. Die Steuereinrichtung ist insbesondere eingerichtet, den mit dem Traktionsantrieb 30 verbunden Trennschalter 34 zu steuern.

Die Steuereinrichtung 65 ist insbesondere eingerichtet, die Frequenz, die Spannung und/oder den Strom von Komponenten der Leistungsschaltung 10 gemäß der einzustellenden Anwendung oder Konfiguration oder gemäß dem einzustellenden Energiefluss einzustellen. Ist etwa die fahrzeugseitige Netzsteckdose 74 angeschlossen, dann wird die Frequenz und die Spannung des Traktionsinverters 40 gemäß der Frequenz (beispielsweise 50 oder 60 Hz) und der Spannung eines öffentlichen Versorgungsnetzes 140 eingestellt. Wenn eine zur induktiven Energieübertragung vorgesehene Spule an den Traktionsinverter 30 angeschlossen ist, dann wird eine Frequenz gewählt, die dem gewünschten Wechselfeld der Spule entspricht, wobei dies im Bereich von mehreren Kiloherz liegen kann, insbesondere in einem Bereich über 50 oder 70 kHz.

Ferner ist die Steuereinrichtung 65 eingerichtet, die Spannung an dem Verknüpfungspunkt 60 und/oder an dem Energiespeicheranschluss 82 einzustellen. Mit anderen Worten ist die Steuereinrichtung 60 eingerichtet, insbesondere die Spannung an zumindest einer Seite des DCAC-Wandlers 40 und/oder des DCDC-Wandlers 50 bzw. den dort fließenden Strom einzustellen.

Die Kombination aus einzustellendem Zustand der Auswahlschaltung(en) und einzustellenden Betriebsparametern (etwa Spannung, Frequenz oder Strom) kann als Soll-Betriebmodus bezeichnet werden. Dieser entspricht der einzustellenden Anwendung bzw. dem Energiefluss und kann auch der Konfiguration gleichgesetzt werden.

Eine Ausführungsform sieht vor, dass die Leistungsschaltung 10 mit der Auswahlschaltung ausgerüstet ist. Die Auswahlschaltung weist eine Spannungserkennungseinheit auf, insbesondere die vorangehend beschriebene Spannungserkennungseinheit. Die Spannungserkennungseinheit ist mit mindestens zwei der folgenden Komponenten verbunden: der Traktionsantrieb 30, der Wechselspannungsanschluss 70, der Gleichspannungsanschluss 20, der Energiespeicheranschluss 82 und die Spule zur induktiven Energieübertragung. Die Spannungserkennungseinheit ist ferner eingerichtet ist, zu erfassen, ob eine Spannung an der betreffenden Komponente anliegt, um die Auswahlschaltung, eine Frequenz des Traktionsinverters 40 und/oder eine Spannung des Traktionsinverters 40 gemäß einem möglichen Betriebsmodus oder einem vorgegebenen Soll-Betriebsmodus einzustellen.

Ferner sind in der Figur 1 Komponenten zur Erläuterung von Anwendungsfällen dargestellt. Ein stationäres Gleichspannungs-Versorgungsnetz (an allgemeines Versorgungsnetz anbindbar oder als Insellösung) umfasst eine Photovoltaikanlage 100 mit einem daran angeschlossenen DCDC-Wandler 102 und einen stationären Energiespeicher 110 mit einem daran angeschlossenen DCDC-Wandler 112. Das stationäre Gleichspannungs-Versorgungsnetz umfasst eine stationäre Gleichstromleitung (Gleichspannungsnetz), an die die Photovoltaikanlage 100 sowie der stationäre Energiespeicher 110 über die daran jeweils angeschlossenen Wandler 102, 112 angeschlossen sind. Es können weitere Verbraucher oder Energiequellen angeschlossen sein, etwa eine Brennstoffzelle 120, die über einen daran angeschlossenen eigenen Wandler 122 an die Gleichstromleitung angebunden ist. Die Photovoltaikanlage 100, der stationäre Energiespeicher 110 und/oder die Brennstoffzelle 120 können an den Gleichspannungsanschluss 20 der Leistungsschaltung 10 angeschlossen werden, insbesondere zum bidirektionalen Leistungsaustausch oder auch nur zum Übertragen von Leistung an die Leistungsschaltung 10.

Ferner kann das Gleichspannungs-Versorgungsnetz über einen (vorzugsweise bidirektionalen) stationären DCAC-Wandler 130 (und einen nachgeschalten Netzfilter 132) an ein allgemeines Wechselspannungsversorgungsnetz angeschlossen werden. Der Anschluss an das Wechselspannungsversorgungsnetz 140 kann über Überlastsicherungen 142 abgesichert sein. Über den DCAC-Wandler 130 können die Komponenten 100, 110 und/oder 120 des Gleichspannungs-Versorgungsnetzes an das Wechselspannungsversorgungsnetz 140 angeschlossen werden, etwa zur Einspeisung von Energie in das Wechselspannungsversorgungsnetz 140 oder zur Aufnahme von Energie aus dem Wechselspannungsversorgungsnetz 140 (dies betrifft insbesondere den stationären Energiespeicher 110 oder auch die Brennstoffzelle 120, die dann als Elektrolyseur arbeitet). Der fahrzeugseitige Wechselspannungsanschluss 70 kann an den stationären DCAC-Wandler angeschlossen werden (über den Netzfilter 132, der hierbei optional ist) bzw. kann an das allgemeine Wechselspannungsversorgungsnetz 140 angeschlossen werden (über die Überlastsicherungen 142). Dadurch ist eine Energieübertragung zwischen dem stationären Gleichspannungsnetz (Inselnetz) bzw. dem allgemeinen Wechselspannungsversorgungsnetz 140 einerseits und der fahrzeugseitigen Leistungsschaltung 10 möglich. Diese Energieübertragung ist bidirektional.

Insbesondere kann gleichzeitig über den Wechselspannungsanschluss 70 und über den Gleichspannungsanschluss 20 Leistung an die Leistungsschaltung übertragen werden, insbesondere zur Aufladung des elektrischen Energiespeichers 80. Dieser Anwendungsfall kann auch als paralleles Wechselstrom- und Gleichstromladen bezeichnet werden. Dadurch sind deutlich kürzere Ladezeiten möglich. Ferner können mehrere Energiequellen gleichzeitig verwendet werden, um den Energiespeicher zu laden, etwa ein öffentliches Versorgungsnetz und gleichzeitig ein lokales Kraftwerk, etwa ein Photovoltaikanlage. Dieser Anwendungsfall verdeutlicht ferner das Einsparungspotential, das durch die Erfindung gegeben ist, da hierbei der Traktionsinverter 40, der (auch) zur Erzeugung des Drehfelds in dem Antrieb 30 verwendet wird, für eine andere Funktion, nämlich die AC/DC-Wandlung und insbesondere zur Steuerung des Energieflusses von dem Wechselstromanschluss 70 in Richtung Energiespeicher 80, verwendet wird. Die Einsparung an Leistungsbauteilen durch diese mehrfache Verwendung ist aufgrund der hohen Kosten von Leistungshalbleitern beträchtlich.

Weiterhin kann die Leistungsschaltung 10 über den Wechselspannungsanschluss 70 Leistung aus dem allgemeinen stationären Wechselspannungsnetz 140 aufnehmen und über den Traktionsinverter 40 und den DCDC-Wandler 50 an dem Gleichspannungsanschluss 20 an das stationäre Gleichspannungsnetz (insbesondere an die Brennstoffzelle 120 und/oder an den stationären Energiespeicher 110) abgeben. Dadurch kann der DCAC-Wandler 130 bei der Aufnahme von Leistung aus dem Wechselspannungsnetz 140 entlastet bzw. unterstützt werden. Insbesondere kann dieser mit geringerer Leistung (im Vergleich ohne Nutzung der Leistungsschaltung) dimensioniert werden, da üblicherweise das Fahrzeug bzw. die Leistungsschaltung 10 größtenteils zur Verfügung steht, wenn die Brennstoffzelle 120 oder der stationäre Energiespeicher 110 (mit Nachtstrom bzw. zu günstigem Tarif) geladen wird.

Die Figur 2 zeigt ein stationäres Energieversorgungssystem 200 mit einer Gleichstrom-Leitung 260, mindestens einer elektrischen Energiequelle 202, 204, 206 und mindestens einem Energiequelle-DCDC-Wandler 203, 205, 207, der die betreffende Energiequelle 202, 204, 206 mit der Gleichstrom-Leitung 260 (Gleichstrom-Versorgungsnetz, Inselnetz) verbindet. Jede elektrischen Energiequelle 202, 204, 206 ist über einen der Energiequelle-DCDC-Wandler 203, 205, 207 mit der Gleichstrom-Leitung 260 verbunden. (Die elektrischen Energiequellen können gemäß einer nicht dargestellten Ausführungsform direkt an die Gleichstrom-Leitung angeschlossen sein, ohne Wandler). Die Energiequelle 202 kann eine Photovoltaik-Anlage sein, die Energiequelle 204 kann eine Brennstoffzelle sein, und die Energiequelle 206 kann ein stationärer elektrischer Energiespeicher sein. Die Wandler können bidirektional sein, etwa im Falle der Wandler 205 und 207. Es werden bidirektionale Energiequelle-DCDC-Wandler verwendet, wenn die Energiequelle, die der betreffende Wandler mit der Gleichstrom-Leitung 260 verbindet, auch zur Aufnahme von Energie ausgestaltet ist, etwa im Falle des elektrischen Energiespeichers 206, der als stationärer Akkumulator ausgestaltet ist, oder im Falle der Brennstoffzelle 204. Die Energiequelle-DCDC-Wandler dienen zur Ankopplung einer Energiequelle an die Gleichstrom-Leitung 260 und tragen daher die Vorsilbe "Energiequelle".

Ferner weist das stationäre Energieversorgungssystem 200 einen Inverter 230 auf, dessen DC-Seite 232 an die Gleichstrom-Leitung 260 angeschlossen ist, sowie einen Gleichspannungsanschluss 220 und einen Wechselspannungsanschluss 270. Der Wechselspannungsanschluss 270 ist mit einer AC-Seite 234 des Inverters 230 verbunden. Der Inverter 230 ist insbesondere ein bidirektionaler DCAC-Wandler. Die AC-Seite 234 und der Wechselspannungsanschluss 270 sind mehrphasig ausgestaltet, insbesondere dreiphasig. Der Wechselspannungsanschluss 270 dient dem Anschluss eines Fahrzeugs.

Der Gleichspannungsanschluss 220 ist zum Anschluss eines elektrisch angetriebenen Fahrzeugs 290 eingerichtet. Diesbezüglich haben der Anschluss 270 und der Anschluss 220 gleiche Eigenschaften und können ggf. in einem Anschluss kombiniert sein, etwa als Buchse gemäß eines CCS-Ladestecksystems gemäß IEC 62196. Der Gleichspannungsanschluss 220 ist direkt mit dem Gleichstrom-Leistungsbus des Fahrzeugs verbunden (ggf. über Überlastsicherungen, Filter, oder seriellen Trennschaltern).

Der Wechselspannungsanschluss 270 ist ebenso zum Anschluss eines elektrisch angetriebenen Fahrzeugs 290 eingerichtet und ist über den Inverter 230 mit der Gleichstrom-Leitung 260 verbunden. Alternativ oder zusätzlich zum Gleichspannungsanschluss 220 kann ein Fahrzeug auch über den Wechselspannungsanschluss 270 angeschlossen sein. Fahrzeugseitig kann der elektrischen Maschine ein Traktions-Inverter 340 nachgeschaltet sein. Auf diese Weise ist der Wechselstromanschluss über die elektrische Maschine 330 und über den (bidirektionalen) Traktions-Inverter 340 mit einem Verknüpfungspunkt verbunden, an den auch der (stationäre) Gleichspannungsanschluss 220 und ein fahrzeugseitiger DCDC-Wandler 250 angeschlossen ist. Hierbei verbindet der fahrzeugseitige DCDC-Wandler 250 den (stationären) Gleichspannungsanschluss 220 mit einem fahrzeugseitigen Energiespeicher 280.

In einer alternativen Ausführungsform ist der DCDC-Wandler 250 stationär (und somit ein Teil des Energieversorgungssystems) und ist dem Anschluss 220 vorgeschaltet. Ein EMV-Filter kann fahrzeugseitig vorgesehen sein.

Alternativ oder zusätzlich ist der Wechselspannungsanschluss 270 mit einem allgemeinen Wechselstrom-Versorgungsnetz 240 verbunden (ggf. über Trennschalter, Filter und/oder Überlastsicherungen), wobei mit 242 ein elektrischer Versorgungsnetz-Gebäudeanschluss für ein allgemeines Wechselstrom-Versorgungsnetz bezeichnet ist.

Der Versorgungsnetzanschluss 242 kann insbesondere direkt oder über ein Netzfilter 236 mit einem elektrischen Versorgungsnetz verbunden sein. Bei der Verwendung eines Netzfilters 236 wird der alternative Wechselspannungsanschluss 242', der über den Netzfilter (direkt) zum Wechselstrom-Versorgungsnetz 240 führt, mit dem Wechselstromanschluss 270 verbunden. Der Netzfilter 236 ist optional; die Anschlüsse 242 und 242' sind austauschbar.

Das stationäre Energieversorgungssystem kann ferner einen stationären elektrischen Energiespeicher und einen vorzugsweise bidirektionalen Speicher-DCDC-Wandler aufweisen, der den stationären elektrischen Energiespeicher mit dem Gleichstrom-Leistungsbus verbindet.

Die Komponenten mit den folgenden Bezugszeichen entsprechen sich und können die gleichen Eigenschaften aufweisen:
100, 110, 120 ↔ 202, 204, 206
102, 112, 122 ↔ 203, 205, 207
20 ↔ 220
30 ↔ 330
40 ↔ 340
50 ↔ 250
70 ↔ 270
80 ↔ 280

Das stationäre Energieversorgungssystem ist komplementär zur Leistungsschaltung ausgebildet und ist zur Verbindung mit der Leistungsschaltung ausgestaltet.

Die Komponenten mit den folgenden Bezugszeichen entsprechen sich in komplementärem Sinne und können (bis auf ihre fahrzeugseitige bzw. stationäre Anordnung) die gleichen Eigenschaften aufweisen:
60 ↔ 260
40 ↔ 230

Insbesondere das stationäre Energieversorgungssystem unterstützt folgende Anwendungen:
- Energieübertragung von der Energiequelle 202 in das Versorgungsnetz 240 (Rückspeisung, Einspeisung);
- Energieübertragung von dem Versorgungsnetz 240 in eine (aufladbare) Energiequelle 204, 206 (Laden, stationär);
- Energieübertragung von einem Fahrzeug bzw. dessen Energiespeicher 280 über den Gleichstromanschluss 220 in eine (aufladbare) stationäre Energiequelle 204, 206 (fahrzeugseitige Unterstützung stationäres Netz, Energieübertragung über DCDC-Wandler 250);
- Energieübertragung von einem Fahrzeug über den Gleichstromanschluss 220 und den Inverter 230 in das Versorgungsnetz 240 (fahrzeugseitige Rückspeisung in Versorgungsnetz);
- Energieübertragung von dem Versorgungsnetz 240 an die stationäre Energiequelle 204, 206 über den Wechselspannungsanschluss 270, den fahrzeugseitigen DCAC-Wandler 340 und den Gleichspannungsanschluss 220. (fahrzeugseitige Rückspeisung in stationäre Energiespeicher / Energiequellen)

Die letztgenannte Energieübertragung kann gleichzeitig mit einer Energieübertragung ausgehend von dem Versorgungsnetz über den Inverter 230 an die Gleichstrom-Leitung bzw. an die betreffenden Energiequellen 204, 206 ausgeführt werden.

Da die Energiequellen 204, 206 auch Energie aufnehmen und speichern können, können dieser Komponenten auch als elektrische Energiespeicher bezeichnet werden. Die Energiespeicher sind allgemeine elektrostatische (Kondensator) oder elektrochemische (Kondensator, Brennstoffzelle, Akkumulator) Energiespeicher oder eine Kombination hieraus.

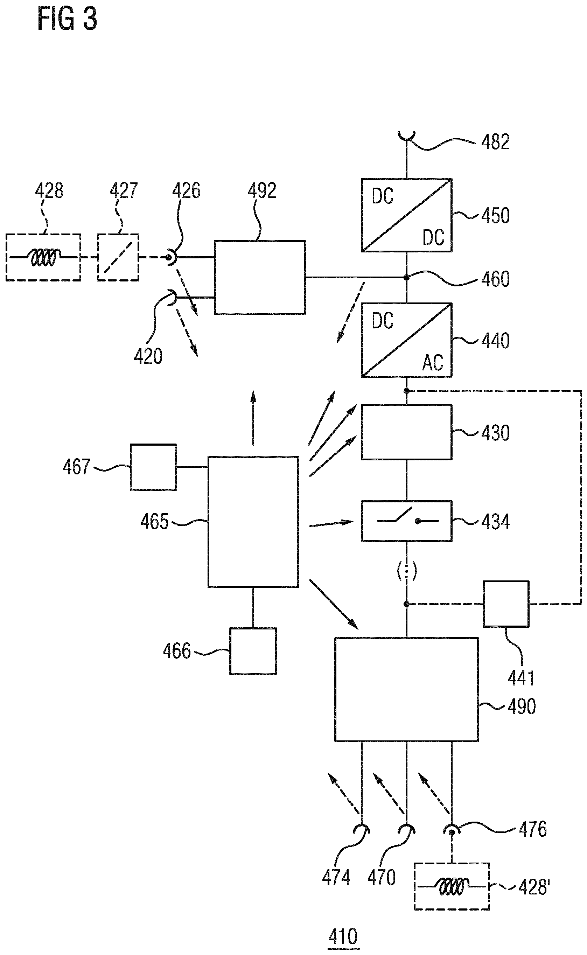

Die Figur 3 zeigt eine beispielhafte Leistungsschaltung 410 zur Erläuterung des Aspekts der automatischen oder semiautomatischen Konfiguration. Die Leistungsschaltung 410 ist mit einem DCAC-Wandler 440 und einem DCDC-Wandler 450 (vorzugsweise beide bidirektional) ausgestattet. Eine Gleichstromseite des DCAC-Wandlers 440 ist mit dem DCDC-Wandler 450 verbunden, wobei an dieser Verbindung ein Verknüpfungspunkt 460 vorgesehen ist, an den (über eine Auswahlschaltung 492) ein Gleichstromanschluss 420 angeschlossen ist. Der Wechselstromseite des DCAC-Wandlers 440 ist ein elektrischer Traktionsantrieb 430 (d.h. eine elektrische Maschine) nachgeschaltet. Dem Traktionsantrieb 430 ist ein (optionaler) Trennschalter 434 nachgeschaltet. Es kann anstatt oder in Kombination mit dem Trennschalter 434 ein eigener Netzfilter 441 (mit eigenen Filterinduktivitäten) vorgesehen sein, der dem DCAC-Wandler 440 nachgeschaltet ist und diesen mit dem Auswahlschalter 490 oder mit Anschlüssen 470, 474, 476 (wie im Weiteren erläutert) verbindet.

Der Auswahlschalter 490 ist zwischen dem DCAC-Wandler 440 und den Anschlüssen 470, 474, 476 verbunden. Diese dienen zum Anschluss an Wechselspannungslasten oder Wechselspannungsquellen. Der Anschluss 470 entspricht dem Wechselstromanschluss, der zur Anbindung an eine stationäres Wechselspannungsnetz vorgesehen ist. Der Anschluss 474 ist insbesondere als fahrzeugseitige Netzsteckdose ausgebildet. Der Anschluss 476 ist ein Anschluss zur Anbindung einer Spule 428' zur induktiven Energieübertragung. Die Spule 428' ist in der dargestellten Ausführungsform kein Teil der Leistungsschaltung 410 und ist daher (als optional) gestrichelt dargestellt. In anderen Ausführungsformen kann die Spule 428' Teil der Leistungsschaltung 410 sein.

Der Auswahlschalter 490 wird von einer Steuereinrichtung 465 angesteuert. Eine Spannungserkennungseinheit 466 erfasst die Spannungen oder Spannungspotentiale an unterschiedlichen Punkten der Leistungsschaltung 410. In der Figur 3 ist die Erfassung der Spannungen durch gestrichelte Pfeile symbolhaft dargestellt. Es werden insbesondere die Spannungen an den Anschlüssen 474, 470 und 476 (für Wechselstrom) sowie an den Anschlüssen 426 und 420 (für Gleichstrom) erfasst. Ferner kann auch die Spannung an dem Energiespeicheranschluss 482 von der Spannungserkennungseinheit 466 erfasst werden. Die Spannungserkennungseinheit 466 erkennt insbesondere, ob an den Anschlüssen Spannung anliegt, oder nicht, oder erfasst einen Spannungswert oder erfasst, ob eine Spannung anliegt, die über einem vorgegebenen Schwellwert liegt. Die Spannungserkennungseinheit 466 ist daher in der Lage, zu erfassen, ob der betreffende Anschluss belegt ist, oder nicht. Beispielsweise kann erfasst werden, dass an den Anschlüssen 420 und 470 jeweils eine Spannung anliegt. Daraus kann von der Steuereinrichtung geschlossen werden, dass beide Anschlüsse (gleichzeitig) verwendet werden können, um elektrische Energie zur Leistungsschaltung zu übertragen, etwa um einen Energiespeicher (anschließbar an Anschluss 482) zu laden. Liegt nur an einem der Anschlüsse 420, 470 eine Spannung an, so wird nur dieser Anschluss zur Übertragung von Energie an die Leistungsschaltung 410 verwendet. Neben der Spannung kann die Spannungserkennungseinheit etwa durch einen Widerstandsmessung ermitteln, ob an einem der betreffenden Anschlüsse ein nicht aktives Element (allgemein eine Last) angeschlossen ist, oder ob der betreffende Anschluss frei ist. Hierbei kann etwa erfasst werden, wenn der Anschluss 476 (oder 426) mit einer Spule (direkt oder indirekt) verbunden ist, um gegebenenfalls an den betreffenden Anschluss ein Spannungssignal zur Spulenanregung anzulegen. Da eine Widerstandmessung beispielsweise durchgeführt werden kann, indem eine Spannung gemessen wird, wenn ein Strom angelegt ist, oder zur Stromermittlung eine Spannung an einem Shunt-Widerstand gemessen wird, wenn eine Spannung angelegt wird, kann die Spannungserkennungseinheit auch in Funktion als Widerstandsmesseinheit als Spannungserkennungseinheit bezeichnet werden.

Die Auswahlschalter 490, 492 werden gemäß den von der Steuereinrichtung 465 ausgehenden Pfeilen angesteuert. Diese Pfeile geben den Weg der Ansteuersignale symbolhaft wieder. Neben den Auswahlschaltern kann die Steuereinrichtung 465 auch wandelnde oder schaltende Komponenten der Leistungsschaltung 410 ansteuern, etwa den DCDC-Wandler 450, den DCAC-Wandler 440, den Trennschalter 434 und/oder den Antrieb 430.

Die Steuereinrichtung 465 kann gemäß einer vorgegebenen Programmierung bzw. Zuordnung automatisch oder semiautomatisch die oben beschriebenen Komponenten ansteuern. Die Programmierung bzw. Zuordnung verknüpft Zustände (Spannung / keine Spannung bzw. Widerstand unendlich oder nicht unendlich), die von der Spannungserfassungseinheit ermittelt werden, mit Soll-Schaltzuständen der Auswahlschalter 490, 492, Soll-Frequenzen des DCAC-Wandlers 440 und/oder Soll-Spannungen an der Wechselstromseite oder an der Gleichstromseite des DCAC-Wandlers oder an einem der Anschlüsse. Ist etwa an dem Anschluss 474 für eine Netzsteckdose eine Last eingesteckt, wobei dies etwa über den dort erfassbaren endlichen Widerstand erfasst werden kann, dann kann der DCAC-Wandler 440 eingestellt werden, an der Ausgangsseite eine Wechselspannung von 230 V bei 50 Hz zu erzeugen. Hierbei kann die Steuereinrichtung zusammen mit der Spannungserkennungseinheit 466 eine Regelung bilden, die die Spannung an dem betreffenden Anschluss (hier Anschluss 474) auf einen bestimmten Sollwert regelt. Ferner steuert die Steuereinrichtung 465 die Auswahlschaltung 490 an, den DCAC-Wandler 440 mit dem Anschluss 474 zu verbinden, wobei der Trennschalter 434 mit dem Zustand "offen" angesteuert werden kann.

Als automatische Zuordnung oder Programmierung wird eine Ansteuerung durch die Steuereinrichtung allein aufgrund der Erfassung durch die Spannungserkennungseinheit 466 bzw. ohne Berücksichtigung einer Benutzereingabe bezeichnet. Die Steuereinrichtung 465 kann die erfassten Zustände und/oder die Soll-Zustände (bzw. die zugehörigen Anwendungen oder Energieflüsse) an einer Benutzerschnittstelle 467 darstellen, insbesondere als Bild einer elektronischen Anzeige. Bei einer semiautomatischen Zuordnung oder Programmierung werden die erfassten Zustände und/oder die hierbei möglichen Anwendungen oder Energieflüsse dargestellt. Es wird in diesem Fall von der von der Benutzerschnittstelle 467 erfasst, welche der Möglichkeiten gewählt wird bzw. es wird ein Bestätigungssignal erfasst. Gemäß dem Signal, das mittels der Benutzerschnittstelle erfasst wird, steuert die Steuereinrichtung 465 die betreffenden Komponenten an. Die Benutzerschnittstelle ist in diesem Fall vorzugsweise ein berührungsempfindlicher Bildschirm oder eine Anzeige mit Tasten oder anderer Eingabegeräte zur Erfassung der Benutzereingabe.

An die Auswahleinheit 492 kann an den Anschluss 426 eine Spule 428 zur induktiven Energieübertragung angeschlossen sein, wobei zwischen der Spule 428 und dem Anschluss ein vorzugsweise bidirektionaler Inverter 427 angeschlossen ist. Da die Auswahleinheit 492 bzw. die daran angeschlossene Gleichstromseite des Inverters 440 für Gleichspannung ausgelegt ist, die Spule 428 selbst jedoch mit Wechselspannung betrieben wird oder diese erzeugt, ist der Inverter 427 notwendig. Im Gegensatz hierzu kann die Spule 428' direkt an die Auswahleinheit 490 angeschlossen werden, da die Auswahleinheit (bzw. die daran angeschlossene Wechselspannungsseite des DCAC-Wandlers 440) ebenso für Wechselspannung ausgelegt ist.

Die Auswahleinheiten 490, 492 können als elektromechanische oder vorzugsweise als elektronische Schalteinheiten ausgebildet sein. Insbesondere können die Auswahleinheiten 490, 492 mehrere Schalter aufweisen, die den Verknüpfungspunkt 460 bzw. die Wechselstromseite des DCAC-Wandlers 440 mit den betreffenden Anschlüssen 420, 426 bzw. 470, 474, 476 frei wählbar verbinden. Es können von einer der Auswahleinheiten mehrere Anschlüsse gleichzeitig zugeschaltet werden, oder die Auswahleinheiten sind als Umschalter ausgelegt, bei denen immer nur ein Anschluss zugeschaltet wird.

Die Komponenten der Figur 3 und der Figur 1 mit den folgenden Bezugszeichen entsprechen sich, wobei entsprechende Komponenten die gleichen Eigenschaften aufweisen können:
30 ↔ 430
40 ↔ 440
50 ↔ 450
60 ↔ 460
65 ↔ 465

Der Wechselstromanschluss 70 der Figur 1 ist der einzige Anschluss, der (indirekt) zum Traktionsantrieb 30 führt. Da in der Figur 3 der Auswahlschalter 490 vorgesehen ist, befindet sich der für den Anschluss an ein Versorgungsnetz vorgesehene Anschluss 470 an einer externen Seite des Auswahlschalters 490. Bis auf die Zwischenschaltung des Auswahlschalters entsprechen sich daher der Wechselspannungsanschluss 70 und der Anschluss 470. In gleicher Weise trifft das für den Gleichstromanschluss 20 und den (auswählbaren) Anschluss 420 zu.

## Patentansprüche

1. Leistungsschaltung (10) zur Stromversorgung für ein elektrisch angetriebenes Fahrzeug, wobei die Leistungsschaltung (10) umfasst:
- einen Energiespeicheranschluss (82), der zum Anschluss eines fahrzeugseitigen Energiespeichers (80) vorgesehen ist;
- einen Gleichspannungsanschluss (20) eingerichtet zum Anschluss externer Anlagen, insbesondere eines externen Versorgungsnetzes;
- mindestens einen bidirektionalen DCAC-Wandler (40), der eine Wechselspannungsseite (42) aufweist und der Teil einer Ladevorrichtung ist sowie eingerichtet ist zur Erzeugung einer für Versorgungsnetze üblichen Wechselspannung, wobei die Wechselspannungsseite (42) mit einem Wechselspannungsanschluss (70) der Leistungsschaltung verbunden ist, wobei
die Wechselstromseite (42) des DCAC-Wandlers (40) mit einer elektrischen Maschine (30) der Leistungsschaltung oder mit einem Anschluss hierfür verbunden ist und einen Inverter für die elektrische Maschine (30) bildet
oder
die Leistungsschaltung eine Auswahlschaltung aufweist, die die Wechselspannungsseite (42) auswählbar mit der elektrischen Maschine bzw. dem Anschluss hierfür, mit einem internen Wechselspannungsanschluss, mit dem als externer Anschluss ausgeführten Wechselspannungsanschluss (70) und/oder mit einer Spule zur induktiven Energieübertragung bzw. einem entsprechenden Spulenanschluss verbindet; und
wobei ferner die Leistungsschaltung (10) mindestens einen DCDC-Wandler (50) mit zwei Wandlerseiten (52, 54) umfasst, wobei die erste Wandlerseite (52) über einen Verknüpfungspunkt (60) mit einer Gleichspannungsseite (44) des DCAC-Wandlers (40) verbunden ist und der Gleichspannungsanschluss (20) ebenso mit diesem Verknüpfungspunkt (60) verbunden ist, wobei die zweite Wandlerseite (52) des DCDC-Wandlers (50) mit dem Energiespeicheranschluss (82) verbunden ist und der DCDC-Wandler (50) zur bidirektionalen Energieübertragung zwischen den beiden Wandlerseiten (52, 54) eingerichtet ist, wodurch der Gleichspannungsanschluss (20) zum Laden des fahrzeugseitigen Energiespeichers sowie zur Stützung eines externen Versorgungsnetzes eingerichtet ist, wobei in beiden Richtungen Energie durch den Gleichspannungsanschluss (20) fließen kann.

2. Leistungsschaltung nach einem der vorangehenden Ansprüche, die ferner einen Wechselspannungsanschluss (70) aufweist, wobei die Leistungsschaltung eine elektrische Maschine (50) oder ein Anschluss hierfür umfasst und die elektrische Maschine (30) voneinander trennbare Wicklungen aufweist, wobei der DCAC-Wandler (40) mit dem Wechselspannungsanschluss (70) seriell über zumindest eine Wicklungen verbunden ist.

3. Leistungsschaltung nach einem der vorangehenden Ansprüche, wobei der Gleichspannungsanschluss (20) und/oder der Batterieanschluss (82) einen Trennschalter (22, 72) und/oder eine Überlastsicherung aufweisen.

4. Leistungsschaltung nach einem der vorangehenden Ansprüche, mit einem Umschalter, der den Gleichspannungsanschluss (20) steuerbar entweder mit dem Verknüpfungspunkt (60) oder mit dem Batterieanschluss (82) verbindet.

5. Leistungsschaltung nach Anspruch 1, die mit der Auswahlschaltung ausgerüstet ist, wobei die Auswahlschaltung eine Spannungserkennungseinheit aufweist, die mit mindestens zwei der folgenden Komponenten verbunden ist: die elektrische Maschine (30) oder der Anschluss hierfür, der Wechselspannungsanschluss (70), der Gleichspannungsanschluss (20), dem Energiespeicheranschluss (82) und der Spule zur induktiven Energieübertragung, wobei die Spannungserkennungseinheit ferner eingerichtet ist, zu erfassen, ob eine Spannung an der betreffenden Komponente anliegt, um die Auswahlschaltung, eine Frequenz des DCAC-Wandlers (40) und/oder eine Spannung des DCAC-Wandlers (40) gemäß einem möglichen Betriebsmodus oder einem vorgegebenen Soll-Betriebsmodus einzustellen.

6. Leistungsschaltung nach einem der vorangehenden Ansprüche, wobei der Gleichspannungsanschluss (20) und der Wechselspannungsanschluss (70) als Kontakte einer gemeinsamen Steckverbindungskomponente ausgebildet sind, die insbesondere gemäß IEC 62196 ausgebildet ist.

7. Leistungsschaltung nach einem der vorangehenden Ansprüche, wobei der DCAC-Wandler (40) und/oder der DCDC-Wandler (50) ausgebildet sind, eine steuerbar veränderliche Gleichspannung an dem Verknüpfungspunkt (60) zu erzeugen.

8. Leistungsschaltung nach einem der vorangehenden Ansprüche, wobei der DCAC-Wandler (40) mit einer Leistungserfassungseinrichtung ausgestattet ist, die eingerichtet ist, die Energie, welche durch den DCAC-Wandler (40) fließt, für beide Flußrichtungen jeweils zu ermitteln.

9. Stationäres Energieversorgungssystem (200) mit
- einer Gleichstrom-Leitung (260)
- einer vorzugsweise regenerativen elektrischen Energiequelle (202, 204, 206);
- einem vorzugsweise bidirektionalen Energiequelle-DCDC-Wandler (203, 205, 207), der die Energiequelle (202, 204, 206) mit der Gleichstrom-Leitung (260) verbindet;
- einem Inverter (230), der an die Gleichstrom-Leitung (260) angeschlossen ist; und
- einem Gleichspannungsanschluss (220), der an ein elektrisch angetriebenes Fahrzeug (290) mit einer Leistungsschaltung nach einem der Ansprüche 1 - 8 an den Gleichspannungsanschluss (20) der Leistungsschaltung angeschlossen ist und direkt mit der Gleichstrom-Leitung (260) verbunden ist.

10. Stationäres Energieversorgungssystem (200) nach Anspruch 9, das ferner einen Versorgungsnetzanschluss (242) aufweist, der mit dem Inverter (230) direkt oder über ein Netzfilter (236) verbunden ist und der ferner mit einem elektrischen Versorgungsnetz (240) verbunden ist.

11. Stationäres Energieversorgungssystem (200) nach Anspruch 9 oder 10, wobei das stationäre Energieversorgungssystem (200) ferner einen stationären elektrischen Energiespeicher (202, 204, 206) und einen vorzugsweise bidirektionalen Speicher-DCDC-Wandler (205, 207) aufweist, der den stationären elektrischen Energiespeicher mit der Gleichstrom-Leitung (260) verbindet.

## Claims

1. Power circuit (10) for supplying power for an electrically driven vehicle, the power circuit (10) comprising:
- an energy store connection (82) which is provided for the purpose of connecting a vehicle-side energy store (80);
- a DC voltage connection (20) set up to connect external systems, in particular an external supply network;
- at least one bidirectional DC/AC converter (40) which has an AC voltage side (42) and is part of a charging apparatus and is set up to generate an AC voltage conventional for supply networks, the AC voltage side (42) being connected to an AC voltage connection (70) of the power circuit,
the AC side (42) of the DC/AC converter (40) being connected to an electrical machine (30) of the power circuit or to a connection for the latter and forming an inverter for the electrical machine (30),
or
the power circuit having a selection circuit which selectably connects the AC voltage side (42) to the electrical machine or the connection for the latter, to an internal AC voltage connection, to the AC voltage connection (70) in the form of an external connection and/or to a coil for inductive energy transmission or a corresponding coil connection; and
the power circuit (10) also comprising at least one DC/DC converter (50) having two converter sides (52, 54), the first converter side (52) being connected to a DC voltage side (44) of the DC/AC converter (40) via a linking point (60) and the DC voltage connection (20) likewise being connected to this linking point (60), the second converter side (52) of the DC/DC converter (50) being connected to the energy store connection (82), and the DC/DC converter (50) being set up to transmit energy in a bidirectional manner between the two converter sides (52, 54), as a result of which the DC voltage connection (20) is set up to charge the vehicle-side energy store and to support an external supply network, energy being able to flow through the DC voltage connection (20) in both directions.

2. Power circuit according to one of the preceding claims, which also has an AC voltage connection (70), the power circuit comprising an electrical machine (50) or a connection for the latter, and the electrical machine (30) having windings which can be disconnected from one another, the DC/AC converter (40) being connected in series with the AC voltage connection (70) via at least one winding.

3. Power circuit according to one of the preceding claims, the DC voltage connection (20) and/or the battery connection (82) having an isolating switch (22, 72) and/or an overload safety device.

4. Power circuit according to one of the preceding claims, having a changeover switch which controllably connects the DC voltage connection (20) either to the linking point (60) or to the battery connection (82).

5. Power circuit according to Claim 1, which is equipped with the selection circuit, the selection circuit having a voltage detection unit which is connected to at least two of the following components: the electrical machine (30) or the connection for the latter, the AC voltage connection (70), the DC voltage connection (20), the energy store connection (82) and the coil for inductive energy transmission, the voltage detection unit also being set up to detect whether a voltage is applied to the relevant component in order to set the selection circuit, a frequency of the DC/AC converter (40) and/or a voltage of the DC/AC converter (40) according to a possible operating mode or a predefined desired operating mode.

6. Power circuit according to one of the preceding claims, the DC voltage connection (20) and the AC voltage connection (70) being in the form of contacts of a common plug connection component which is designed according to IEC 62196, in particular.

7. Power circuit according to one of the preceding claims, the DC/AC converter (40) and/or the DC/DC converter (50) being designed to generate a controllably variable DC voltage at the linking point (60).

8. Power circuit according to one of the preceding claims, the DC/AC converter (40) being equipped with a power detection device which is set up to respectively determine the energy which flows through the DC/AC converter (40) for both flow directions.

9. Stationary energy supply system (200) having
- a DC line (260),
- a preferably regenerative electrical energy source (202, 204, 206);
- a preferably bidirectional energy source DC/DC converter (203, 205, 207) which connects the energy source (202, 204, 206) to the DC line (260);
- an inverter (230) which is connected to the DC line (260); and
- a DC voltage connection (220) which is connected to an electrically driven vehicle (290) having a power circuit according to one of Claims 1-8 at the DC voltage connection (20) of the power circuit and is directly connected to the DC line (260).

10. Stationary energy supply system (200) according to Claim 9, which also has a supply network connection (242) which is connected to the inverter (230) directly or via a network filter (236) and is also connected to an electrical supply network (240).

11. Stationary energy supply system (200) according to Claim 9 or 10, the stationary energy supply system (200) also having a stationary electrical energy store (202, 204, 206) and a preferably bidirectional store DC/DC converter (205, 207) which connects the stationary electrical energy store to the DC line (260) .

## Revendications

1. Circuit de puissance (10) pour l'alimentation en courant d'un véhicule à propulsion électrique, le circuit de puissance (10) comprenant :
- une borne d'accumulation d'énergie (82) qui est prévue pour la connexion d'un accumulateur d'énergie côté véhicule (80) ;
- une borne de tension continue (20) qui est aménagée pour la connexion d'équipements externes, en particulier d'un réseau d'alimentation externe ;
- au moins un convertisseur CC/CA bidirectionnel (40) qui présente un côté tension alternative (42) et qui fait partie d'un dispositif de chargement et qui est aménagé pour produire une tension alternative habituelle pour des réseaux d'alimentation, le côté tension alternative (42) étant relié à une borne de tension alternative (70) du circuit de puissance, dans lequel
le côté courant alternatif (42) du convertisseur CC/CA (40) est relié à une machine électrique (30) du circuit de puissance ou à une borne destinée à celle-ci et constitue un onduleur pour la machine électrique (30),
ou
le circuit de puissance présente un circuit de sélection qui relie le côté tension alternative (42) de manière sélectionnable à la machine électrique ou à la borne destinée à celle-ci, à une borne de tension alternative interne, à la borne de tension alternative (70) réalisée sous la forme d'une borne externe, et/ou à une bobine de transmission d'énergie inductive ou à une borne de bobine correspondante ; et
le circuit de puissance (10) comprenant en outre au moins un convertisseur CC/CC (50) avec deux côtés de convertisseur (52, 54), le premier côté de convertisseur (52) étant relié par un point de liaison (60) à un côté tension continue (44) du convertisseur CC/CA (40), et la borne de tension continue (20) étant également reliée à ce point de liaison (60), le deuxième côté de convertisseur (52) du convertisseur CC/CC (50) étant relié à la borne d'accumulation d'énergie (82), et le convertisseur CC/CC (50) étant aménagé pour la transmission d'énergie bidirectionnelle entre les deux côtés de convertisseur (52, 54) de sorte que la borne de tension continue (20) est aménagée pour charger l'accumulateur d'énergie côté véhicule ainsi que pour assister un réseau d'alimentation externe, l'énergie pouvant circuler dans les deux sens à travers la borne de tension continue (20).

2. Circuit de puissance selon l'une quelconque des revendications précédentes, qui présente en outre une borne de tension alternative (70), le circuit de puissance comprenant une machine électrique (50) ou une borne destinée à celle-ci, et la machine électrique (30) présentant des enroulements pouvant être séparés les uns des autres, le convertisseur CC/CA (40) étant relié en série à la borne de tension alternative (70) par au moins un enroulement.

3. Circuit de puissance selon l'une quelconque des revendications précédentes, dans lequel la borne de tension continue (20) et/ou la borne de batterie (82) présentent un disjoncteur (22, 72) et/ou une protection contre les surcharges.

4. Circuit de puissance selon l'une quelconque des revendications précédentes, comprenant un commutateur qui relie la borne de tension continue (20) de manière contrôlable soit au point de liaison (60), soit à la borne de batterie (82).

5. Circuit de puissance selon la revendication 1, qui est équipé du circuit de sélection, le circuit de sélection présentant une unité d'identification de tension qui est reliée à au moins deux des composants suivants : la machine électrique (30) ou la borne destinée à celle-ci, la borne de tension alternative (70), la borne de tension continue (20), la borne d'accumulation d'énergie (82) et la bobine de transmission d'énergie inductive, l'unité d'identification de tension étant en outre aménagée pour détecter si une tension est appliquée au composant en question afin de régler le circuit de sélection, une fréquence du convertisseur CC/CA (40) et/ou une tension du convertisseur CC/CA (40) selon un mode de fonctionnement possible ou un mode de fonctionnement de consigne spécifié.

6. Circuit de puissance selon l'une quelconque des revendications précédentes, dans lequel la borne de tension continue (20) et la borne de tension alternative (70) sont réalisées sous la forme de contacts d'un composant de connexion enfichable commun, en particulier réalisées selon IEC 62196.

7. Circuit de puissance selon l'une quelconque des revendications précédentes, dans lequel le convertisseur CC/CA (40) et/ou le convertisseur CC/CC (50) est/sont réalisé(s) pour produire une tension continue variable de manière contrôlable au niveau du point de jonction (60).

8. Circuit de puissance selon l'une quelconque des revendications précédentes, dans lequel le convertisseur CC/CA (40) est équipé d'un dispositif de détection de puissance qui est aménagé pour déterminer l'énergie circulant à travers le convertisseur CC/CA (40) respectivement pour les deux sens de circulation.

9. Système d'alimentation en énergie stationnaire (200), comprenant
- une ligne de courant continu (260),
- une source d'énergie électrique (202, 204, 206), de préférence régénérative ;
- un convertisseur CC/CC (203, 205, 207) de source d'énergie, de préférence bidirectionnel, qui relie la source d'énergie (202, 204, 206) à la ligne de courant continu (260) ;
- un onduleur (230) qui est connecté à la ligne de courant continu (260); et
- une borne de tension continue (220) qui est connectée sur un véhicule à propulsion électrique (290) comprenant un circuit de puissance selon l'une quelconque des revendications 1 à 8 à la borne de tension continue (20) du circuit de puissance et est reliée directement à la ligne de courant continu (260).

10. Système d'alimentation en énergie stationnaire (200) selon la revendication 9, présentant en outre une borne de réseau d'alimentation (242) qui est reliée à l'onduleur (230) directement ou par un filtre réseau (236), et qui est en outre reliée à un réseau d'alimentation électrique (240).

11. Système d'alimentation en énergie stationnaire (200) selon la revendication 9 ou 10, dans lequel le système d'alimentation en énergie stationnaire (200) présente en outre un accumulateur d'énergie électrique stationnaire (202, 204, 206) et un convertisseur CC/CC (205, 207) d'accumulateur, de préférence bidirectionnel, qui relie l'accumulateur d'énergie électrique stationnaire à la ligne de courant continu (260) .
